(19) Europäisches Patentamt
European Patent Office
Office européen des brevets

(11) **EP 2 963 714 B1**

(12) **EUROPEAN PATENT SPECIFICATION**

(45) Date of publication and mention
of the grant of the patent:
**12.04.2017 Bulletin 2017/15**

(21) Application number: **15170372.5**

(22) Date of filing: **03.06.2015**

(51) Int Cl.:
*H01M 8/04014* (2016.01)    *H01M 8/04223* (2016.01)
*H01M 8/04746* (2016.01)    *H01M 8/0612* (2016.01)
*H01M 8/04955* (2016.01)    *C01B 3/38* (2006.01)
*H01M 8/124* (2016.01)    *H01M 8/0432* (2016.01)
*H01M 8/04537* (2016.01)    *H01M 8/04664* (2016.01)

(54) **FUEL CELL SYSTEM**

**BRENNSTOFFZELLENSYSTEM**

**SYSTÈME DE PILE À COMBUSTIBLE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2014 JP 2014134608**

(43) Date of publication of application:
**06.01.2016 Bulletin 2016/01**

(73) Proprietor: **AISIN SEIKI KABUSHIKI KAISHA
Kariya-shi, Aichi 448-8650 (JP)**

(72) Inventors:
• **Ohkawara, Hiroki**
**Kariya-shi, Aichi 448-8650 (JP)**
• **Toyonaga, Norihiko**
**Kariya-shi, Aichi 448-8650 (JP)**

(74) Representative: **TBK
Bavariaring 4-6
80336 München (DE)**

(56) References cited:
**EP-A1- 1 850 415**      **EP-A2- 2 237 352**
**US-A1- 2013 316 258**

**Description**

TECHNICAL FIELD

This disclosure relates to a fuel cell system.

BACKGROUND DISCUSSION

JP 2004-116934 A (Reference 1), EP2237352 A2 (Reference 2), and US 2013/0316258 A1 (Reference 3) disclose one type of a fuel cell system. As illustrated in Fig. 1 of Reference 1, such a fuel cell system includes a reforming section (reforming apparatus 21) that generates a reformed gas containing hydrogen from water for reforming and a raw reforming material, a fuel cell 10 that generates electricity using the reformed gas and the air, and a combusting section (burner 21 d) that combusts a gas mixture formed from a combustible component discharged from the fuel cell 10, and an oxidant gas and thus heats the reforming section.

In the technology disclosed in Reference 1, the gas mixture is ignited in the combusting section using a method illustrated as follows. Firstly, the air is started to be supplied and the inside of the combusting section is discharged using an ignition transformer. Secondly, the raw reforming material is supplied and it is determined whether or not ignition occurs in the combusting section. Thirdly, when ignition does not occur, only the raw reforming material is supplied and discharging by the ignition transformer is repeated. Accordingly, after ignition occurs, the gas mixture in which the raw reforming material is diluted with the air is supplied to the combusting section. However, the concentration of the raw reforming material in the gas mixture increases soon and the gas mixture starts to be ignited in the combusting section.

In the technology disclosed in Reference 2, the gas mixture is ignited in the combusting section and the raw reforming material supplied to the combusting section is not diluted with air until the temperature of the reforming section rises to about 300°C.

In such fuel cell systems, generation of electricity in a fuel cell is handled in such a manner that a gas mixture is ignited in a combusting section in a rich fuel state where a proportion of reforming fuel to the air is high, and a gas mixture which has a reduced proportion of a raw reforming material to the air, compared to a proportion at a time of ignition, after ignition occurs is fed to the combusting section. However, if ignition of the gas mixture in the combusting section occurs and then the gas mixture which has a reduced proportion of the raw reforming material to the air compared to a proportion at the time of ignition is fed to the combusting section, combustion of the gas mixture in the combusting section after ignition is unstably performed due to a case where the composition of the raw reforming material is changed, and the like. Accordingly, combustion of the gas mixture in the combusting section may be suspended.

SUMMARY

Thus, a need exists for preventing suspension of combustion after ignition in a combusting section of a fuel cell system including the combusting section to which a combustible component is fed from a fuel cell and in which the combustible component is combusted.

A first aspect of this disclosure is directed to a fuel cell system which includes the features defined in claim 1.

According to the first aspect, the oxygen proportion adjusting section performs correction of an oxygen proportion of a gas which is introduced into the combusting section, to the correction oxygen proportion which allows the combustible component to be ignited and combusted. Then, when a defined condition is satisfied, the oxygen proportion changing section changes an oxygen proportion of a gas which is introduced into the combusting section, from the correction oxygen proportion to the normal oxygen proportion. Thus, after ignition occurs in the combusting section and, for example, before combustion in the combusting section is stably performed, regardless of dissatisfaction of the defined condition, suspension of combustion in the combusting section due to change of an oxygen proportion of a gas which is introduced into the combusting section, to the normal oxygen proportion is prevented.

According to the first aspect, a proportion of hydrogen contained in the reformed gas becomes larger as the temperature of the reforming section increases. Thus, the hydrogen is more easily combusted in the combusting section compared to other components contained in the reformed gas. For this reason, if the proportion of hydrogen in the reformed gas increases, combustion in the combusting section is stably performed. Using this principle, when the temperature of the reforming section which is detected by the reforming-section temperature detecting section exceeds a defined temperature which causes the proportion of hydrogen contained in the reformed gas to become larger, the oxygen proportion changing section determines combustion in the combusting section to be stably performed, and changes an oxygen proportion of a gas which is introduced into the combusting section, from the correction oxygen proportion to the normal oxygen proportion. Accordingly, changing of an oxygen proportion of a gas which is introduced into the combusting section, to the normal oxygen proportion regardless of instability of combustion in the combusting section is prevented. Suspension of combustion in the combusting section is also prevented.

A second aspect of this disclosure is directed to the first aspect, wherein the oxygen proportion adjusting section sets the correction oxygen proportion of the gas to have the maximum value which allows the gas to be ignited and combusted in the combusting section, in an initial state where the gas introduced into the combusting section is ignited and combusted. With this configuration, an oxygen proportion of a gas which is introduced into the combusting section is set to be the maximum oxygen proportion which allows the gas to be ignited and combusted, in a predictable range of a composition of the raw reforming material, in the initial state where the combustion gas introduced into the combusting section is ignited and combusted. The oxygen proportion of the gas which is introduced into the combusting section is gradually changed from the maximum oxygen proportion to a lower oxygen proportion and it is checked whether or not ignition is to be performed in the combusting section. For this reason, regardless of an oxygen proportion which can cause a gas to be ignited in the combusting section existing, checking of ignition of a gas having the oxygen proportion in the combusting section is ensured. Accordingly, it is possible to reliably ignite a gas in the combusting section. Whether or not a gas which is introduced into the combusting section is ignited in the combusting section in a lean fuel state corresponding to an oxygen proportion which means that the raw reforming material for the oxidant gas is the smallest among oxygen proportions which enable ignition and combustion is checked. For this reason, it is possible to suppress generation of carbon monoxide in the combusting section due to occurrence of ignition in the combusting section in a state where the oxygen proportion of the gas introduced into the combusting section is low, that is, in a rich fuel state of the gas introduced into the combusting section.

A third aspect of this disclosure is directed to the first aspect or the second aspect, wherein feeding of the raw reforming material to the reforming section by the raw reforming material feeding section is suspended when the correction oxygen proportion changed by the oxygen proportion adjusting section is equal to or less than a defined oxygen proportion. With this configuration, for example, when the correction oxygen proportion changed by the oxygen proportion adjusting section is equal to or less than an oxygen proportion which causes incomplete combustion to occur in the combusting section, feeding of the raw reforming material to the reforming section is suspended. Accordingly, occurrence of incomplete combustion in the combusting section is prevented.

A fourth aspect of this disclosure is directed to the first to third aspects, wherein the fuel cell system further includes an abnormality determining section that determines abnormality when the ignition and combustion determining section determines that ignition does not occur or when the correction oxygen proportion changed by the oxygen proportion adjusting section is equal to or less than a defined oxygen proportion. With this configuration, when an oxygen proportion changed by the oxygen proportion adjusting section is equal to or less than the defined oxygen proportion, it is assumed that other causes which do not allow ignition to be performed in the combusting section, or other causes which allow blow-off to occur in the combusting section, other than the oxygen proportion are included, and thus it is determined to be abnormal. Accordingly, other causes which do not allow ignition to be performed in the combusting section or other causes which allow blow-off to occur in the combusting section, other than the oxygen proportion are detected.

A fifth aspect of this disclosure is directed to the first to fourth aspects, wherein the fuel cell system further includes a catalytic combustor to which a combustion gas containing a combustible component which is discharged from the combusting section and is not combusted is introduced and which causes the combustible component contained in the combustion gas to be combusted through a catalytic reaction; and a catalytic combustor temperature detecting section that detects a temperature of the catalytic combustor or a temperature of an exhaust gas which is exhausted from the catalytic combustor, and the oxygen proportion changing section changes an oxygen proportion of a gas which is introduced into the combusting section from the correction oxygen proportion to the normal oxygen proportion when a temperature detected by the catalytic combustor temperature detecting section is equal to or greater than an abnormal temperature. In a state where the temperature of the catalytic combustor is higher than the abnormal temperature, incomplete combustion occurs in the combusting section, a flow rate of the combustible component introduced into the catalytic combustor from the combusting section increases, and the combustible component is combusted in the catalytic combustor. As described above, the oxygen proportion changing section changes an oxygen proportion of a gas which is introduced into the combusting section from the correction oxygen proportion to the normal oxygen proportion when the temperature detected by the catalytic combustor temperature detecting section is equal to or higher than the abnormal temperature. Accordingly, when the oxygen proportion changing section incorrectly changes an oxygen proportion of a gas introduced into the combusting section at the time of ignition to an oxygen proportion which causes incomplete combustion to occur in the combusting section, due to disturbance, the oxygen proportion of the gas introduced into the combusting section is changed to the normal oxygen proportion. For this reason, it is possible to suppress occurrence of incomplete combustion in the combusting section due to a gas having a low oxygen proportion which causes incomplete combustion to occur being introduced into the combusting section.

A sixth aspect of this disclosure is directed to the first to fifth aspects, wherein the fuel cell system further includes at least one of a voltage detecting section that detects a voltage output by the fuel cell, and a fuel cell temperature detecting section that detects a temperature of the fuel cell, and the oxygen proportion changing section changes the oxygen proportion from the correction oxygen proportion to the normal oxygen proportion when at least one of conditions is established. The conditions include a condition in which a voltage which is output by the fuel cell and is detected by the voltage detecting section is equal to or greater than an electricity generation enabling voltage, and a condition in which a temperature of the fuel cell which is detected by the fuel cell temperature detecting section is equal to or greater than an electricity generation enabling temperature.

When electricity is generated in the fuel cell, it is possible to detect excess or deficiency of a flow rate of fuel which is introduced into the fuel cell, based on a drawn current which is drawn from the fuel cell. When electricity is generated in the fuel cell, it is possible to detect excess or deficiency of a flow rate of fuel which is introduced into the fuel cell, based on the temperature of the fuel cell. For this reason, it is possible to cause combustion in the combusting section to become stable by detecting excess or deficiency of a flow rate of fuel which is introduced into the fuel cell and correcting the flow rate of the fuel which is introduced into the fuel cell. Since the drawn current which is drawn from the fuel cell has a value of 0 and the temperature of the fuel cell is also unstable when electricity is not generated in the fuel cell, it is impossible to detect excess or deficiency of a flow rate of fuel which is introduced into the fuel cell. As described above, when at least one of conditions which correspond to a condition in which a voltage which is output by the fuel cell is equal to or larger than the electricity generation enabling voltage, and a condition in which the temperature of the fuel cell is equal to or higher than the electricity generation enabling temperature, is established and when electricity is allowed to be generated in the fuel cell, the oxygen proportion changing section changes an oxygen proportion of a gas introduced into the fuel cell to an electricity generation normal oxygen proportion which corresponds to an oxygen proportion at a time of generating electricity in the fuel cell. Since even though an oxygen proportion of a gas which is introduced into the fuel cell is changed to the electricity generation normal oxygen proportion, it is possible to detect excess or deficiency of a flow rate of fuel which is introduced into the fuel cell, based on the drawn current which is drawn from the fuel cell or the temperature of the fuel cell when electricity is generated in the fuel cell, it is possible to correct a flow rate of fuel which is introduced into the fuel cell. For this reason, it is possible to cause combustion in the combusting section to become stable by correcting the flow rate of the fuel which is introduced into the fuel cell.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic diagram illustrating an overview of an embodiment (first embodiment) of a fuel cell system disclosed here;
Fig. 2A is a flowchart of "first ignition processing" which is executed by a controller illustrated in Fig. 1;
Fig. 2B is a flowchart of another example of the "first ignition processing" which is executed by the controller illustrated in Fig. 1;
Fig. 3 is a graph illustrating a relationship of the temperature of a reforming section, and a reformed gas composition;
Fig. 4 is a diagram illustrating a relationship of an oxygen proportion λ of a gas mixture which is introduced into a combusting section and a combustion state of the combusting section and is a diagram illustrating second ignition processing; and
Fig. 5 is a flowchart of the "second ignition processing" which is executed by the controller illustrated in Fig. 1.

DETAILED DESCRIPTION

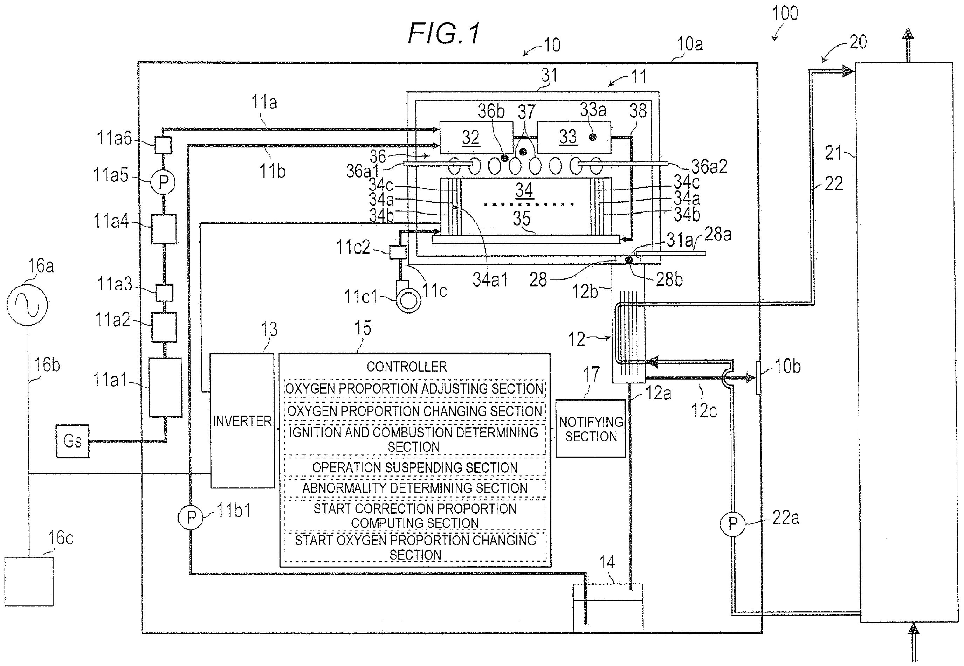

Hereinafter, an embodiment of a fuel cell system 100 disclosed here will be described. As illustrated in Fig. 1, the fuel cell system 100 includes an electricity generation unit 10 and a hot water storage tank 21. The electricity generation unit 10 includes a housing 10a, a fuel cell module 11, a heat exchanger 12, an inverter 13, a water tank 14, a controller 15, and a notifying section 17.

The fuel cell module 11 includes a casing 31, an evaporating section 32, a reforming section 33, and a fuel cell 34. The casing 31 is formed of a heat-insulating material and has a box shape. The evaporating section 32 is heated by a combustion gas which is combusted by a combusting section 36 (will be described later) so as to evaporate water for reforming which is fed thereto and to generate steam and preheats a raw reforming material which is fed thereto. The evaporating section 32 mixes the steam which is generated in this manner with the preheated raw reforming material and feeds mixture to the reforming section 33.

One end of a raw reforming material feed pipe 11a is connected to the evaporating section 32. A feed source Gs is connected to another end of the raw reforming material feed pipe 11a. The feed source Gs is used for feeding a raw reforming material. Examples of the raw reforming material include reforming gas fuel such as natural gas and LP gas or reforming liquid fuel such as kerosene, gasoline, and methanol. The fuel cell system 100 according to this embodiment which is an embodiment of using natural gas as the raw reforming material will be described.

A shut-off valve 11a1, a desulfurizer 11a2, a raw reforming material flow rate sensor 11a3, a buffer tank 11a4, a raw material pump 11a5, and a check valve 11a6 are provided in the raw reforming material feed pipe 11a in order starting upstream. The shut-off valve 11a1 is a valve (double valve) that shuts the raw reforming material feed pipe 11a off openably and closably in accordance with a command from the controller 15. The desulfurizer 11a2 removes a sulfur component (for example, sulfur compound) from the raw reforming material. The raw reforming material flow rate sensor 11a3 detects a flow rate of a raw reforming material which is fed to the evaporating section 32, that is, detects a flow amount per unit of time. The raw reforming material flow rate sensor 11a3 transmits a detection result to the controller 15. The buffer tank 11 a4 suppresses accuracy degradation or deviation from a real value of the raw reforming material flow rate sensor 11a3 due to pulsation of the raw material pump 11a5.

The raw material pump 11a5 (raw reforming material feeding section) is a feeder for feeding a reformed gas (fuel) to the fuel cell 34 by feeding the raw reforming material to the evaporating section 32 (reforming section 33). The raw material pump 11a5 adjusts a fuel feed amount (feed flow rate (flow amount per unit of time)) from the feed source Gs in accordance with a control command value from the controller 15. The check valve 11a6 is arranged between the raw material pump 11a5 and the fuel cell module 11 (evaporating section 32). The check valve 11a6 allows a flow from the raw material pump 11a5 to the fuel cell module 11, but prohibits a flow in a reverse direction.

One end of a water feed pipe 11b is connected to the evaporating section 32. The water tank 14 is connected to another end of the water feed pipe 11 b. Water for reforming pump 11b1 is provided in the water supply pipe 11b. With such a configuration, water for reforming is fed to the evaporating section 32 from the water tank 14.

One end of a cathode air feed pipe 11c is connected to the fuel cell 34. A cathode air blower 11c1 is connected to another end of the cathode air feed pipe 11c. With such a configuration, a cathode air is fed to the fuel cell 34. A cathode air flow rate sensor 11c2 is provided on a downstream side of the cathode air blower 11c1 in the cathode air feed pipe 11c. The cathode air flow rate sensor 11 c2 detects a flow rate of the cathode air which is fed to the fuel cell 34.

The reforming section 33 is heated by the combustion gas which is combusted by the combusting section 36 (will be described later) so as to receive heat necessary for a steam reforming reaction, and thus generates and obtains the reformed gas from a raw material gas (raw reforming material and steam) which is fed from the evaporating section 32. The reforming section 33 is filled with a catalyst (for example, Ru-based catalyst or Ni-based catalyst). The raw material gas is reacted and reformed by the catalyst and thus a gas containing hydrogen gas and carbon monoxide is generated (so-called steam reforming reaction). That is, in the reforming section 33, reactions expressed by the following Chemical Formulas 1 and 2 occur.

$$\text{(Formula 1)} \qquad CH_4 + H_2O \rightarrow CO + 3H_2$$

$$\text{(Formula 2)} \qquad H2_O + CO \Leftrightarrow H_2 + CO_2$$

The reformed gas which is generated in this manner contains hydrogen, carbon monoxide, carbon dioxide, steam, unreformed natural gas (methane gas), and water for reforming (steam) which is not used in reforming. In this manner, the reforming section 33 generates the reformed gas (fuel) from the raw reforming material and the water for reforming and feeds the generated reformed gas to the fuel cell 34. The steam reforming reaction is an endothermic reaction.

A reforming section temperature sensor 33a is provided in the reforming section 33. The reforming section temperature sensor 33a detects the temperature $T1$ of the reforming section 33 (temperature of the catalyst). A detection result (output signal) of the reforming section temperature sensor 33a is transmitted to the controller 15.

In the fuel cell 34, electricity is generated using the reformed gas (fuel) which is generated by the reforming section 33, and the cathode air (oxidant gas) which is fed by the cathode air blower 11c1. The fuel cell 34 is configured in such a manner that a plurality of cells 34a are stacked and the cell includes a fuel electrode, an air electrode (oxidant electrode), and an electrolyte which is disposed between both of the electrodes. The fuel cell 34 according to this embodiment is a solid oxide fuel cell and uses zirconium oxide which is one type of solid oxide, as the electrolyte. Hydrogen, carbon monoxide, methane gas, and the like are fed to the fuel electrode of the fuel cell 34, as the fuel.

In the fuel electrode, reactions expressed by the following Chemical Formulas 3 and 4 occur.

$$\text{(Formula 3)} \qquad H_2 + O^{2-} \rightarrow H_2O + 2e^-$$

$$\text{(Formula 4)} \qquad CO + O^{2-} \rightarrow CO_2 + 2e^-$$

In the air electrode, a reaction expressed by the following Chemical Formula 5 occurs.

$$\text{(Formula 5)} \qquad 1/2O_2 + 2e^- \rightarrow O^{2-}$$

That is, oxide ions ($O^{2-}$) which are generated in the air electrode pass through the electrolyte and the oxide ions react with hydrogen in the fuel electrode, and thereby electric energy is generated.

An operation temperature of the fuel cell 34 may be in a range of substantially 400 to 1000°C. Natural gas, coal gas, or the like may be directly used as the fuel in addition to hydrogen. In this case, the reforming section 33 may be omitted.

A fuel flow path 34b in which the reformed gas (fuel) flows is formed on the fuel electrode side of the cell 34a. An air flow path 34c in which the air (cathode air) (oxidant gas) flows is formed on the air electrode side of the cell 34a. A fuel cell temperature detection sensor 34a1 (fuel cell temperature detecting section) is provided in the cell 34a. The fuel cell temperature detection sensor 34a1 detects the temperature of the cell 34a (fuel cell 34) and outputs a detection result to the controller 15.

The fuel cell 34 is provided on a manifold 35. The reformed gas is fed to the manifold 35 from the reforming section 33 through a reformed gas feed pipe 38. The fuel flow path 34b has a lower end (one end) which is connected to a fuel outlet of the manifold 35, and the reformed gas output from the fuel outlet is introduced from the lower end and is output from an upper end. The cathode air which is delivered by the cathode air blower 11c1 is fed through the cathode air feed pipe 11c, and is introduced from a lower end of the air flow path 34c and is output from an upper end thereof.

The combusting section 36 is provided between the fuel cell 34, and the evaporating section 32 and the reforming section 33. The combusting section 36 combusts an anode off gas (fuel off gas) containing the combustible component which is exhausted from the fuel cell 34 with a cathode off gas (oxidant off gas) which is exhausted from the fuel cell 34, and heats the evaporating section 32 and the reforming section 33 using the combustion gas which is generated after combustion.

In the combusting section 36, flame 37 is generated by combusting the anode off gas. A pair of ignition heaters 36a1 and 36a2 (ignition device) is provided in the combusting section 36. The ignition heaters 36a1 and 36a2 ignite a gas mixture of the anode off gas and the cathode off gas which are introduced into the combusting section 36. A combusting section temperature detection sensor 36b is provided on an upper part of the combusting section 36. The combusting section temperature detection sensor 36b detects the temperature T3 of the flame 37 generated by performing combustion in the combusting section 36 and outputs a detection result to the controller 15.

The heat exchanger 12 is a device to which an exhaust gas which is exhausted from the fuel cell module 11 and hot water from the hot water storage tank 21 are supplied and in which the exhaust gas and the hot water exchange each other with heat. The hot water storage tank 21 stores the hot water and a hot water circulation line 22 in which the hot water is circulated (circulated in a direction indicated by arrows in Fig. 1) is connected to the hot water storage tank 21. A circulation pump 22a and the heat exchanger 12 are arranged on the hot water circulation line 22 in an order from a lower end of the hot water storage tank 21 to an upper end. A condensed water feed pipe 12a which is connected to the water tank 14 is connected to the heat exchanger 12.

In the heat exchanger 12, the exhaust gas from the fuel cell module 11 passes in an exhaust gas introduction portion 12b and then is introduced into the heat exchanger 12. The exhaust gas is cooled by exchanging the hot water with heat, and condensed water is obtained by condensing steam contained in the exhaust gas. The exhaust gas subjected to heat exchange passes in an exhaust pipe 12c and passes in a first exhaust port 10b which is provided in the housing 10a, and then is discharged to the outside of the housing 10a. The condensed water passes in the condensed water feed pipe 12a and then is supplied to the water tank 14. The water tank 14 causes the condensed water to become pure water using ion exchange resin.

The heat exchanger 12, the hot water storage tank 21, and the hot water circulation line 22 which are described above, constitute a waste heat recovery system 20. The waste heat recovery system 20 collects and stores waste heat of the fuel cell module 11 in the hot water.

A catalytic combustor 28 is provided in an outlet 31 a of the casing 31. The outlet 31 a of the casing 31 corresponds to a portion at which an inlet of the exhaust gas introduction portion 12b in the heat exchanger 12 is connected to the casing 31. The combustion gas which is exhausted from the combusting section 36 is introduced into the catalytic combustor 28. The catalytic combustor 28 combusts a combustible component (for example, hydrogen, methane gas, carbon monoxide, and the like) which is contained in the combustion gas and is not combusted in the combusting section 36, through a catalytic reaction. The catalytic combustor 28 contains a material obtained by holding precious metal such as platinum and palladium in a simple substance of ceramic, and the like. The catalytic combustor 28 does not perform flaming combustion on the combustible component of hydrogen, methane gas, carbon monoxide, and the like, and performs combustion through the catalytic reaction. Thus, it is possible to have a high combustion speed and to combust a large amount of the combustible component. Further, it is possible to suppress discharge of a not-combusted gas and achieve high combustion efficiency.

A catalytic combustor heater 28a is provided in the catalytic combustor 28. The catalytic combustor heater 28a heats the catalytic combustor up to an activation temperature of a catalyst and combusts the combustible component. The catalytic combustor heater 28a is heated in accordance with an instruction of the controller 15 and is used for increasing the temperature of the catalytic combustor 28 up to the activation temperature before the system starts. A catalytic combustor temperature sensor 28b (temperature detecting section) for detecting the temperature T2 of the catalytic combustor 28 is provided in the catalytic combustor 28. A detection result (output signal) of the catalytic combustor temperature sensor 28b is transmitted to the controller 15.

The inverter 13 draws a current which is generated in the fuel cell 34. This current is referred to as a drawn current below. The inverter 13 converts the drawn current which is a drawn direct current into an alternating current and outputs the alternating current to a power line 16b which is connected to an AC system power supply 16a and an external power load 16c (for example, an electric appliance). The inverter 13 may detect a current value of the drawn current and may cause an amount of the drawn current to increase or decrease. An alternating current from the system power supply 16a is input to the inverter 13 through the power line 16b. The inverter 13 converts the input alternating current into a direct current having a predetermined value, and outputs the direct current to auxiliary machines (pumps, blower, and the like) or the controller 15.

The controller 15 performs overall control of the fuel cell system 100. The controller 15 drives the auxiliary machines and controls an operation of the fuel cell system 100. The controller 15 performs feedback control on a flow rate of the raw reforming material which is fed to the evaporating section 32 by the raw material pump 11a5, based on the flow rate of the raw reforming material to the evaporating section 32, which is detected by the raw reforming material flow rate sensor 11a3. The controller 15 performs feedback control on a flow rate of the cathode air which is fed to the fuel cell 34 by the cathode air blower 11c1, based on the flow rate of the cathode air to the fuel cell 34, which is detected by the cathode air flow rate sensor 11 c2. The controller 15 performs linear current control so as to adjust an amount of a current which is supplied to a motor (not illustrated) for driving the raw material pump 11 a5 or a motor (not illustrated) for driving the cathode air blower 11c1. Here, the linear current control includes PWM control which causes an effective current to be changed so as to be reduced by causing a duty ratio of a voltage for driving the raw material pump 11a5 to be changed.

The controller 15 adjusts the flow rate of the raw reforming material which is fed to the evaporating section 32 by the raw material pump 11a5, adjusts a flow rate of the water for reforming which is supplied to the evaporating section 32 by the water for reforming pump 11b1, and adjusts the flow rate of the cathode air which is fed to the fuel cell 34 by the cathode air blower 11 c1. Thus, the controller 15 adjusts power which is generated in the fuel cell 34, adjusts the quantity of heat which is generated in the combusting section 36, and adjusts the quantity of heat which is supplied to the evaporating section 32 and the reforming section.

Overview of First Ignition Processing

An overview of a "first ignition processing" will be described below. The first ignition processing is for igniting a gas mixture which is introduced into the combusting section 36 when the fuel cell system 100 starts. Before descriptions of the "first ignition processing" are made, an oxygen proportion λ of the gas mixture which is introduced into the combusting section 36 will be described. The oxygen proportion λ has a value represented by the following Expression (1).

$$\lambda = A/B \quad (1)$$

where, λ refers to an oxygen proportion, A refers to a flow rate of oxygen which is actually introduced into the combusting section 36, and B refers to an ideal flow rate of oxygen, which is necessary for completely combusting a combustible component in the gas mixture.

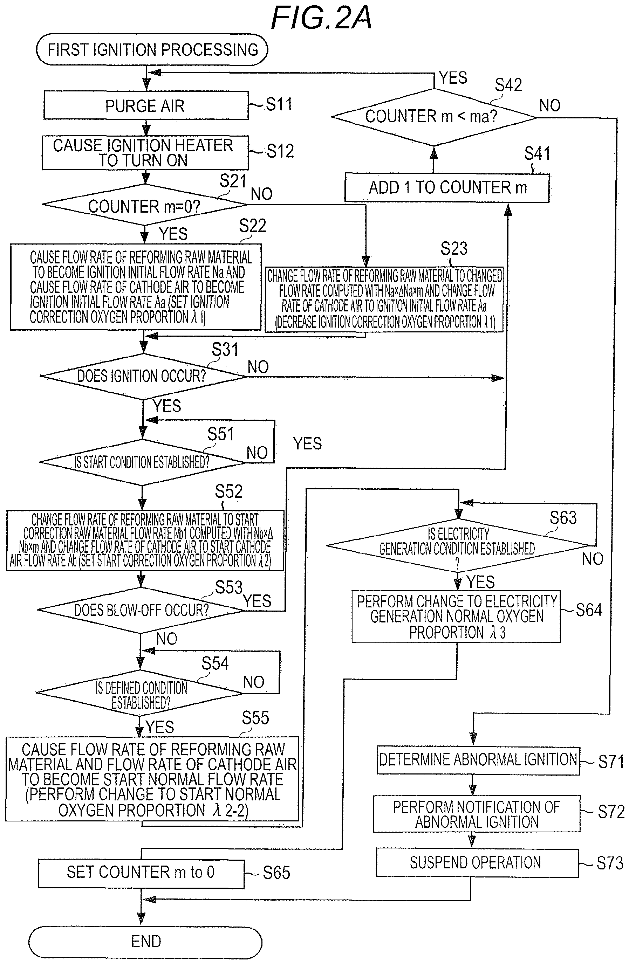

In the "first ignition processing", first, a gas mixture having the maximum oxygen proportion (below referred to as an ignition correction oxygen proportion λ1, for example, 1.1) which enables ignition and combustion in the combusting section 36 is fed to the combusting section 36, and it is checked whether ignition occurs in the combusting section 36. The oxygen proportion λ of the gas mixture which is fed to the combusting section 36 is reduced every time ignition in the combusting section 36 fails and it is checked whether ignition occurs in the combusting section 36. In this manner, the oxygen proportion λ of the gas mixture which is fed to the combusting section 36 is changed to the ignition correction oxygen proportion λ1 which allows the combustible component introduced into the combusting section 36 to be ignited and combusted, and it is checked whether ignition occurs in the combusting section 36. After ignition in the combusting section 36 succeeds in, if a "starting condition" which will be described later is established, the oxygen proportion λ of the gas mixture which is fed to the combusting section 36 is changed to a start correction oxygen proportion λ2 which is an oxygen proportion larger than the ignition correction oxygen proportion λ1. This start correction oxygen proportion λ2 is corrected to be an oxygen proportion λ lower than before, as the number of times of failing in ignition in the combusting section 36 increases. If Defined Condition 1 which will be described later is established, the oxygen proportion λ of the gas mixture which is fed to the combusting section 36 is changed to a normal start oxygen proportion λ2-2 (for example, 1.6) which is an oxygen proportion larger than the start correction oxygen proportion λ2. Defined Condition 1 is a condition for determining that combustion in the combusting section 36 is stably performed. That is, after success in ignition in the combusting section 36, the oxygen proportion λ of the gas mixture which is fed to the combusting section 36 is not changed from the start correction oxygen proportion λ2 to the normal start oxygen proportion λ2-2 quickly, and the start correction oxygen proportion λ2 is maintained until Defined Condition 1 (will be described later) is established, that is, until combustion in the combusting section 36 is stably performed. The "first ignition processing" will be described below using a flowchart illustrated in Fig. 2A. A "correction oxygen proportion" which is disclosed in claims includes the ignition correction oxygen proportion λ1 and the start correction oxygen proportion λ2. A "normal oxygen proportion" which is disclosed in claims includes the normal start oxygen proportion λ2-2 and an electricity generation normal oxygen proportion λ3.

First Ignition Processing

If an operation of the fuel cell system 100 starts, a program proceeds to Step S11. In Step S11, the controller 15 controls the cathode air blower 11c1 to feed the air to the fuel cell 34 for several seconds, and purges a combustible component which remains in a gas flow path on a downstream side of the fuel cell 34. Thus, it is possible to cause safe ignition to occur in the combusting section 36 by removing the combustible component which remains in a gas flow path on a downstream side of the fuel cell 34. If a process of S11 is ended, the controller 15 causes the program to proceed to Step S12.

In Step S12, the controller 15 controls the ignition heaters 36a1 and 36a2 to turn ON, and causes the program to proceed to Step S21.

In Step S21, when the controller 15 determines that a counter m has a value of 0 (YES in Step S21), the controller 15 causes the program to proceed to Step S22. When the controller 15 determines that the counter m does not have a value of 0 (NO in Step S21), the controller 15 causes the program to proceed to Step S23. Since when the "first ignition processing" starts, and then a process of Step S21 is executed for the first time, the counter m is set to 0, the program proceeds to Step S22.

In Step S22, the controller 15 (oxygen proportion adjusting section) controls the raw material pump 11a5 to start feeding of the raw reforming material. The controller 15 (oxygen proportion adjusting section) performs feedback control based on the detection result of the raw reforming material flow rate sensor 11a3 such that the flow rate of the raw reforming material which is fed by the raw material pump 11 a5 becomes an ignition initial flow rate Na. At the same time, the controller 15 (oxygen proportion adjusting section) controls the cathode air blower 11c1 to start feeding of the cathode air. The controller 15 (oxygen proportion adjusting section) performs feedback control based on the detection result of the cathode air flow rate sensor 11c2 such that the flow rate of the cathode air which is fed by the cathode air blower 11 c1 becomes an ignition initial flow rate Aa. In this manner, the gas mixture of the raw reforming material and the cathode air is fed to the combusting section 36. When ignition occurs, since electricity is not generated in the fuel cell 34, hydrogen and oxygen are not consumed from the gas mixture. In a state where the flow rate of the raw reforming material fed by the raw material pump 11a5 reaches the ignition initial flow rate Na and the flow rate of the cathode air fed by the cathode air blower 11c1 becomes the ignition initial flow rate Aa, the ignition correction oxygen proportion λ1 which is the oxygen proportion λ of the gas mixture fed to the combusting section 36 becomes the maximum value (for example, 1.1) which allows the gas mixture to be ignited and combusted. That is, the ignition correction oxygen proportion λ1 of the gas mixture fed to the combusting section 36 becomes the maximum value which allows the gas mixture to be ignited and combusted, in an initial state where the "first ignition processing" starts, and ignition and combustion occurs in the combusting section 36 for the first time. If a process of Step S22 is ended, the controller 15 causes the program to proceed to Step S31.

In Step S23, the controller 15 (oxygen proportion adjusting section) causes the flow rate of the raw reforming material which is fed by the raw material pump 11a5 to be changed to a changed flow rate Na1 computed with the following Expression 1.

$$Na1=Na\times \Delta Na\times m \quad (Expression\ 1)$$

where, Na1: changed flow rate, Na: ignition initial flow rate, ΔNa: defined increase coefficient (numerical value of equal to or more than 1), and m: counter.

The flow rate of the cathode air which is fed by the cathode air blower 11 c1 is maintained to be the ignition initial flow rate Aa.

Every time a process of Step S23 is executed, the flow rate of the raw reforming material which is fed by the raw material pump 11a5 increases, and the ignition correction oxygen proportion λ1 which is the oxygen proportion λ of the gas mixture fed to the combusting section 36 decreases. If the process of Step S23 is ended, the controller 15 causes the program to proceed to Step S31.

In Step S31, when the controller 15 determines that ignition occurs in the combusting section 36 (YES in Step S31), the controller 15 (ignition and combustion determining section) causes the program to proceed to Step S51. When the controller 15 determines that ignition does not occur in the combusting section 36 (NO in Step S31), the controller 15 causes the program to proceed to Step S41. When the controller 15 determines that the temperature T3 detected by the combusting section temperature detection sensor 36b is equal to or higher than an ignition determination temperature, the controller 15 determines that ignition occurs in the combusting section 36. When the controller 15 determines that the temperature T3 detected by the combusting section temperature detection sensor 36b is lower than the ignition determination temperature, the controller 15 determines that ignition does not occur in the combusting section 36.

In S41, the controller 15 adds 1 to the counter m. In this manner, every time it is determined that ignition does not occur in the combusting section 36, in Step S31, or every time it is determined that blow-off occurs in the combusting section 36, in Step S53, as will be described later, the counter m increases one by one in Step S41. The flow rate of the raw reforming material fed by the raw material pump 11a5 increases, and the ignition correction oxygen proportion $\lambda 1$ or the start correction oxygen proportion $\lambda 2$ which is the oxygen proportion $\lambda$ of the gas mixture introduced into the combusting section 36 decreases in Step S23 or Step S52 (will be described later). If a process of Step S41 is ended, the controller 15 causes the program to proceed to Step S42.

In Step S42, when the controller 15 determines that the counter m is less than a defined value ma (YES in Step S42), the controller 15 causes the program to return to Step S11. When the controller 15 determines that the counter m is equal to or more than the defined value ma (NO in Step S42), the controller 15 causes the program to proceed to Step S71. When the counter m is equal to or more than the defined value ma, the ignition correction oxygen proportion $\lambda 1$ or the start correction oxygen proportion $\lambda 2$ which is the oxygen proportion $\lambda$ of the gas mixture introduced into the combusting section 36 is equal to or less than a "defined oxygen proportion" (for example, 1.0) which corresponds to threshold of discharging CO from the combusting section 36 when the gas mixture is ignited in the combusting section 36. This "defined oxygen proportion" is set based on a gas composition of the raw reforming material which causes CO to most easily be generated.

In Step S51, when the controller 15 determines that the "starting condition" which will be described below is established (YES in Step S51), the controller 15 causes the program to proceed to Step S52. When the controller 15 determines that the "starting condition" which will be described below is not established (NO in Step S51), the controller 15 causes a process of Step S51 to be repeated. The starting conditions will be described below.

(Starting Condition 1) case where the temperature T3 detected by the combusting section temperature detection sensor 36b is equal to or higher than a start temperature.

(Starting Condition 2) case where a change amount of the temperature T3 detected by the combusting section temperature detection sensor 36b per unit of time is equal to or greater than a start change amount.

When either Starting Condition 1 or Starting Condition 2 is established, the program proceeds to Step S52.

In Step S52, the controller 15 (start correction oxygen proportion computing section and start oxygen proportion changing section) changes the flow rate of the raw reforming material fed by the raw material pump 11 a5 to a start correction raw material flow rate Nb1 computed with the following Expression 2 and changes the flow rate of the cathode air fed by the cathode air blower 11 c1 to a start cathode air flow rate Ab.

$$Nb1=Nb\times\Delta Nb\times m \quad \text{(Expression 2)}$$

where, Nb1: start correction raw material flow rate, Nb: start normal raw material flow rate, $\Delta$Nb: defined increase coefficient (numerical value of equal to or more than 1), and m: counter.

The "start" means preparation time for increasing the temperature in the fuel cell 34 and generating electricity in the fuel cell 34.

The oxygen proportion $\lambda$ of the gas mixture of the reformed gas and the cathode air which are introduced into the fuel cell 34 is set to the start correction oxygen proportion $\lambda 2$ through a process of Step S52. The start correction oxygen proportion $\lambda 2$ is set to have a reduced value as the counter m increases. Ignition and combustion of the gas mixture which is introduced into the combusting section 36 may be difficult in accordance with a composition of the raw reforming material. In this case, since the counter m increases in Step S41 and the start correction oxygen proportion $\lambda 2$ is set to a value lower than before, in Step S54, the gas mixture which is introduced into the combusting section 36 is stably combusted at a "start" time. The start correction oxygen proportion $\lambda 2$ has a value greater than the ignition correction oxygen proportion $\lambda 1$. If a process of Step S52 is ended, the controller 15 causes the program to proceed to Step S53.

In Step S53, when the controller 15 determines that the temperature T3 detected by the combusting section temperature detection sensor 36b is lower than a blow-off occurrence temperature, the controller 15 determines that blow-off occurs in the combusting section 36 (YES in Step S53) and causes the program to proceed to Step S41. When the controller 15 determines that the temperature T3 detected by the combusting section temperature detection sensor 36b is equal to or higher than the blow-off occurrence temperature, the controller 15 determines that blow-off does not occur in the combusting section 36 (NO in Step S53) and causes the program to proceed to Step S54. Blow-off means a state where combustion is suspended in a portion or in the entirety of the combusting section 36. In this manner, since if blow-off occurs, combustion is suspended at a portion or in the entirety of the combusting section 36, the temperature T3 detected by the combusting section temperature detection sensor 36b decreases further compared to that when blow-off does not occur in the combusting section 36.

In Step S54, when the controller 15 determines that either of the following Defined Condition 1 and Defined Condition 2 is established (YES in Step S54), the controller 15 causes the program to proceed to Step S55. When the controller 15 determines that neither of the following Defined Condition 1 and Defined Condition 2 is not established (NO in Step S54), the controller 15 causes a process of Step S54 to be repeated.

The defined conditions of Defined Condition 1 and Defined Condition 2 will be described below.

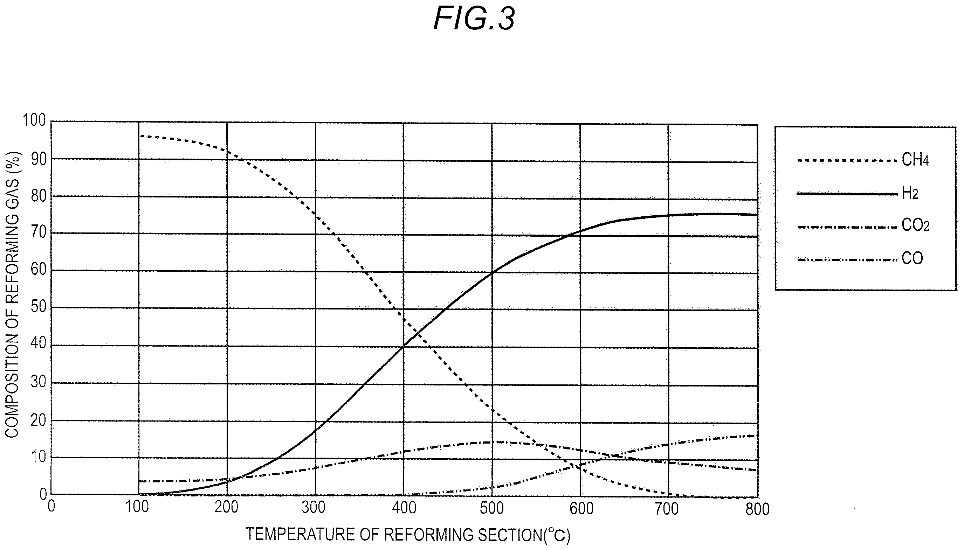

(Defined Condition 1) case where the temperature T1 of the reforming section 33 which is detected by the reforming section temperature sensor 33a exceeds a defined temperature T1a (for example, 600°C). As illustrated in Fig. 3, the proportion of hydrogen contained in the reformed gas becomes larger as the temperature T1 of the reforming section 33 increases. Hydrogen is more easily combusted in the combusting section 36, compared to other components contained in the reformed gas. For this reason, if the proportion of hydrogen in the reformed gas increases, combustion in the combusting section 36 is stably performed. Using this principle, when the temperature T1 of the reforming section 33 which is detected by the reforming section temperature sensor 33a exceeds the defined temperature T1a, the controller 15 (combustion stability determination section) determines that combustion in the combusting section 36 is stably performed and causes the program to proceed to Step S55.

(Defined Condition 2) case where the temperature T2 of the catalytic combustor 28 which is detected by the catalytic combustor temperature sensor 28b exceeds an "abnormal temperature". If the oxygen proportion λ decreases due to correction of the raw reforming material flow rate in Step S23 or Step S52 and an excessively rich fuel state occurs, and thus combustion in the combusting section 36 becomes unstable, the amount of carbon monoxide contained in the combustion gas increases. Thus, the controller 15 increases the oxygen proportion λ of the gas mixture fed to the combusting section 36 in Step S55 which will be described later and causes a combustion state in the combusting section 36 to be improved. Accordingly, when the temperature T2 of the catalytic combustor 28 which is detected by the catalytic combustor temperature sensor 28b exceeds the "abnormal temperature", the controller 15 causes the program to proceed to Step S55.

In Step S55, the controller 15 (oxygen proportion changing section) performs feedback control on the raw material pump 11a5 and the cathode air blower 11c1 based on the detection results from the raw reforming material flow rate sensor 11a3 and the cathode air flow rate sensor 11 c2, and causes the flow rate of the raw reforming material and the flow rate of the cathode air to become a start normal flow rate. The oxygen proportion λ of the gas mixture introduced into the combusting section 36 is changed to the normal start oxygen proportion λ2-2 through this process of Step S55. The normal start oxygen proportion λ2-2 is an oxygen proportion (for example, 1.6) larger than the start correction oxygen proportion λ2. If the process of Step S55 is ended, the controller 15 causes the program to proceed to Step S63.

In Step S63, when the controller 15 determines that an "electricity generation condition" (which will be described later) is established (YES in Step S63), the controller 15 (oxygen proportion changing section) causes the program to proceed to Step S64. When the controller 15 determines that the "electricity generation condition" (which will be described later) is not established (NO in Step S63), the controller 15 causes a process of Step S63 to be repeated. In order to establish the "electricity generation condition", it is required that the temperature of the cell 34a (fuel cell 34) which is detected by the fuel cell temperature detection sensor 34a1 is equal to or higher than the "electricity generation enabling temperature" and a voltage which is output by the cell 34a of the fuel cell 34 and is detected by the inverter 13 is equal to or larger than an "electricity generation enabling voltage".

In Step S64, the controller 15 adjusts the flow rate of the raw reforming material fed by the raw material pump 11 a5 and the flow rate of the cathode air fed by the cathode air blower 11c1. The controller 15 changes the oxygen proportion λ of the gas mixture introduced into the fuel cell 34 to an electricity generation normal oxygen proportion λ3 and causes electricity to be generated in the fuel cell 34. If a process of Step S64 is ended, the controller 15 causes the program to proceed to Step S65.

In Step S65, the controller 15 sets the counter m to 0. If a process of Step S65 is ended, the "first ignition processing" is ended.

In Step S71, the controller 15 (abnormality determining section) determines abnormality of ignition or combustion. When, in Step S42, it is determined that the counter m is equal to or more than the defined value ma, that is, in Step S23, regardless of continuously increasing the flow rate of the raw reforming material, or continuously decreasing the oxygen proportion λ of the gas mixture which is introduced into the combusting section 36, when it is impossible for ignition to occur in the combusting section 36 or when blow-off occurs in the combusting section 36, it is considered that there are other factors which cause occurrence of ignition in the combusting section 36 to be impossible, or other factors which cause blow-off to occur in the combusting section 36 other than the oxygen proportion $\lambda$ of the gas mixture introduced into the combusting section 36. Thus, it is determined that abnormality in ignition or combustion occurs. If a process of Step S71 is ended, the controller 15 causes the program to proceed to Step S72.

In Step S72, the controller 15 causes the notifying section 17 to perform notification of abnormality in ignition or combustion and causes the program to proceed to Step S73.

In Step S73, the controller 15 (operation suspending section) controls feeding of the raw reforming material by the raw material pump 11a5, feeding of the cathode air by the cathode air blower 11c1, and the operation of the fuel cell system 100 to be suspended. If a process of Step S73 is ended, the "first ignition processing" is ended.

Advantages of this embodiment

As apparent from the above description, the controller 15 (oxygen proportion changing section) causes the oxygen proportion $\lambda$ of the gas mixture introduced into the combusting section 36 to be held at the start correction oxygen proportion $\lambda2$ which is set in Step S52 until the controller 15 (combustion stability determination section) determines that combustion in the combusting section 36 is stably performed, that is, until it is determined that the Defined Condition 1 is established (determined to be YES in Step S54 of Fig. 2A). Because the Defined Condition 1 is established and combustion in the combusting section 36 is stably performed, the controller 15 (oxygen proportion changing section) changes the oxygen proportion $\lambda$ of the gas introduced into the combusting section 36 from the start correction oxygen proportion $\lambda2$ to the normal start oxygen proportion $\lambda2$-2. Accordingly, prevention is performed on suspension of combustion in the combusting section 36 due to the oxygen proportion $\lambda$ of the gas introduced into the combusting section 36 being changed to the normal start oxygen proportion $\lambda2$-2 that is the oxygen proportion larger than the oxygen proportion $\lambda$ before combustion in the combusting section 36 is stably performed after ignition occurs in the combusting section 36.

The controller 15 (oxygen proportion adjusting section) changes the ignition correction oxygen proportion $\lambda1$ to the oxygen proportion $\lambda$ which is lower than the ignition correction oxygen proportion $\lambda1$, every time it is determined that ignition does not occur in the combusting section 36 (determined to be NO in Step S31 of Fig. 2A) (Step S23). Thereafter, the oxygen proportion $\lambda$ of the gas fed to the combusting section 36 is gradually changed from a high state to a low state and it is checked whether or not ignition occurs in the combusting section 36. For this reason, even though the composition of the raw reforming material is changed, and the oxygen proportion which enables ignition and combustion in the combusting section 36 is changed, it is possible to perform ignition and combustion of the raw reforming material in the combusting section 36. The controller 15 (oxygen proportion adjusting section) changes the start correction oxygen proportion $\lambda2$ to the oxygen proportion $\lambda$ which is lower than the start correction oxygen proportion $\lambda2$ every time it is determined that blow-off occurs in the combusting section 36 (determined to be YES in Step S53) (Step S52). Accordingly, it is possible to stably combust the gas mixture in the combusting section 36 and to prevent occurrence of blow-off.

The controller 15 (oxygen proportion adjusting section) sets the ignition correction oxygen proportion $\lambda1$ of the initial state where the gas mixture introduced into the combusting section 36 is ignited and combusted, to the maximum value which allows the gas mixture to be ignited and combusted in the combusting section 36 (Step S22). Thereafter, the oxygen proportion $\lambda$ of the gas mixture which is introduced into the combusting section 36 is set to be the maximum oxygen proportion $\lambda$ which allows the gas mixture to be ignited and combusted, in a predictable range of the composition of the raw reforming material. The oxygen proportion $\lambda$ of the gas mixture which is introduced into the combusting section 36 is gradually changed from the maximum oxygen proportion to a lower oxygen proportion $\lambda$ and it is checked whether or not ignition occurs in the combusting section 36 (Step S23). For this reason, regardless of the oxygen proportion $\lambda$ which can cause the gas mixture to be ignited in the combusting section 36, checking of ignition of the gas mixture having the oxygen proportion $\lambda$ in the combusting section 36 is ensured. Accordingly, it is possible to reliably ignite the gas mixture in the combusting section 36. Whether or not the gas mixture which is introduced into the combusting section 36 is ignited in the combusting section 36 when the oxygen proportion $\lambda$ of the gas mixture is the maximum oxygen proportion $\lambda$, that is, in a lean fuel state which means that the gas mixture has the oxygen proportion $\lambda$ which corresponding to a ratio of the smallest combustible component to oxygen is checked. For this reason, it is possible to suppress generation of carbon monoxide in the combusting section 36 due to occurrence of ignition in the combusting section 36 in a state where the oxygen proportion $\lambda$ of the gas mixture introduced into the combusting section 36 is low, that is, in a rich fuel state of the gas mixture introduced into the combusting section 36.

When the ignition correction oxygen proportion $\lambda1$ or the start correction oxygen proportion $\lambda2$ is equal to or lower than the "defined oxygen proportion" (determination of NO in Step S42), the controller 15 (operation suspending section) causes feeding of the raw reforming material to the reforming section 33 by the raw material pump 11a5 (raw reforming material feeding section) to be suspended and causes the operation of the fuel cell system 100 to be suspended (Step S73). Thereafter, when the ignition correction oxygen proportion $\lambda1$ or the start correction oxygen proportion $\lambda2$

which is changed by the controller 15 (oxygen proportion adjusting section) is lower than an oxygen proportion which causes incomplete combustion to occur in the combusting section 36, feeding of the raw reforming material to the reforming section 33 is suspended. For this reason, occurrence of incomplete combustion in the combusting section 36 is prevented.

When the counter m is equal to or more than the defined value ma, that is, when the ignition correction oxygen proportion $\lambda 1$ or the start correction oxygen proportion $\lambda 2$ which is changed by the controller 15 (oxygen proportion adjusting section) is equal to or lower than the "defined oxygen proportion" (determination of NO in Step S42) in Step S42, abnormality of ignition or combustion is determined (Step S71), and the notifying section 17 performs notification of abnormality of ignition or combustion (Step S72). For this reason, a user of the fuel cell system 100 can recognize abnormality of ignition or combustion due to other factors which cause occurrence of ignition in the combusting section 36 to be impossible, or other factors which cause blow-off to occur in the combusting section 36 other than the oxygen proportion $\lambda$ of the gas mixture introduced into the combusting section 36.

The proportion of hydrogen contained in the reformed gas becomes larger as the temperature of the reforming section 33 becomes higher. Hydrogen is more easily combusted in the combusting section 36, compared to other components contained in the reformed gas. For this reason, if the proportion of hydrogen in the reformed gas increases, combustion in the combusting section 36 is stably performed. Using this principle, when the temperature T1 of the reforming section 33 which is detected by the reforming section temperature sensor 33a exceeds the defined temperature T1a (establishment of Defined Condition 1 and determination of YES in Step S52), the controller 15 (combustion stability determination section) determines that combustion in the combusting section 36 is stably performed, and changes the oxygen proportion $\lambda$ of the gas mixture introduced into the combusting section 36 to the start correction oxygen proportion $\lambda 2$. Thus, regardless of instability of combustion in the combusting section 36, changing of the oxygen proportion $\lambda$ of the gas introduced into the combusting section 36 to the start correction oxygen proportion $\lambda 2$ is prevented and suspension of combustion in the combusting section 36 is prevented.

In a state where the temperature of the catalytic combustor 28 is greater than the abnormal temperature, incomplete combustion occurs in the combusting section 36, the flow rate of the combustible component introduced into the catalytic combustor 28 from the combusting section 36 increases, and the introduced combustible component is combusted in the catalytic combustor 28. Using this principle, the controller 15 (oxygen proportion changing section) changes the oxygen proportion $\lambda$ to the normal start oxygen proportion $\lambda 2-2$ which is an oxygen proportion larger than the start correction oxygen proportion $\lambda 2$ when the temperature T2 of the catalytic combustor 28 which is detected by the catalytic combustor temperature sensor 28b (catalytic combustor temperature detecting section) is equal to or higher than the "abnormal temperature" (establishment of Defined Condition 2, and determination of YES in Step S54) (Step S55). Accordingly, when the controller 15 (oxygen proportion changing section) incorrectly changes the oxygen proportion $\lambda$ of the gas mixture introduced into the combusting section 36 at the time of ignition, to the low oxygen proportion $\lambda$ which causes incomplete combustion to occur in the combusting section 36, due to disturbance, the oxygen proportion $\lambda$ of the gas mixture introduced into the combusting section 36 is changed to the normal start oxygen proportion $\lambda 2-2$. For this reason, it is possible to suppress occurrence of incomplete combustion in the combusting section 36 due to the gas mixture having a low oxygen proportion which causes incomplete combustion to occur being introduced into the combusting section 36.

The Other Example of First Ignition Processing

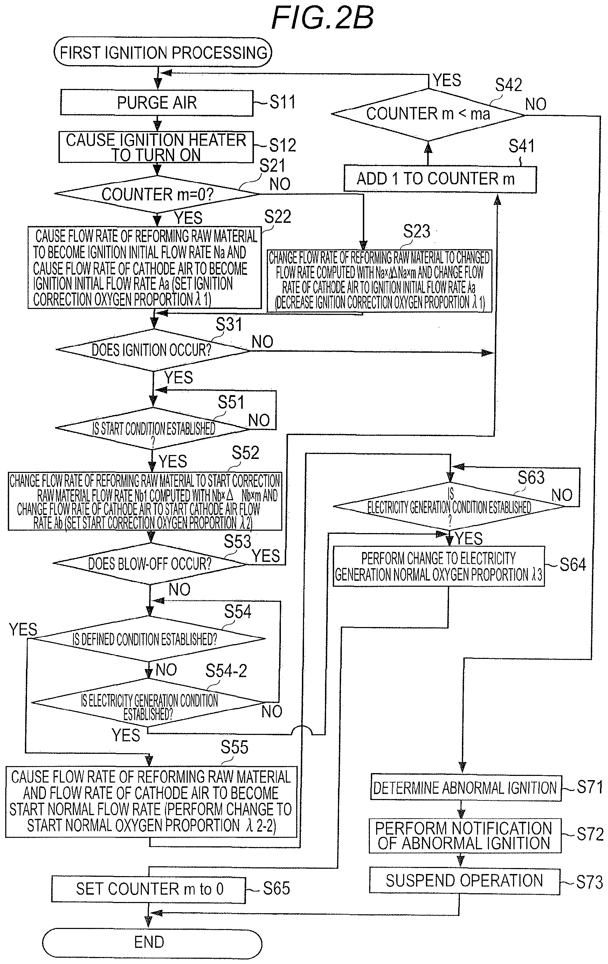

Regarding descriptions of the other example of the "first ignition processing" using a flowchart illustrated in Fig. 2B, points different from the "first ignition processing" described using the flowchart illustrated in Fig. 2A will be described. In the other example of the "first ignition processing", determination of whether or not the above-described Defined Condition 1 is satisfied is not performed in Step S54. In Step S54, when the controller 15 determines that the above-described Defined Condition 2 is satisfied (YES in Step S54), the controller 15 causes the program to proceed to Step S55. When the controller 15 determines that the above-described Defined Condition 2 is not satisfied (NO in Step S54), the controller 15 causes the program to proceed to Step S54-2.

In Step S54-2, when the controller 15 determines that the above-described "electricity generation condition" is established (YES in Step S54-2), the controller 15 causes the program to proceed to Step S64. When the controller 15 determines that above-described "electricity generation condition" is not established (NO in Step S54-2), the controller 15 causes the program to return to Step S54.

In this manner, when the fuel cell system 100 starts the operation, if the "electricity generation condition" is established (YES in Step S54-2), the oxygen proportion of the gas mixture introduced into the fuel cell 34 (combusting section 36) is changed from the start correction oxygen proportion $\lambda 2$ to the electricity generation normal oxygen proportion $\lambda 3$.

When electricity is generated in the fuel cell 34, it is possible to detect excess or deficiency of the flow rate of the fuel which is introduced into the fuel cell 34, based on the drawn current which is drawn from the fuel cell 34. When electricity is generated in the fuel cell 34, it is possible to detect excess or deficiency of the flow rate of the fuel which is introduced into the fuel cell 34, based on the temperature of the fuel cell 34. For this reason, it is possible to cause combustion in the combusting section 36 to be stably performed by detecting excess or deficiency of the flow rate of the fuel which is introduced into the fuel cell 34 and correcting the flow rate of the fuel which is introduced into the fuel cell 34. Since when electricity is not generated in the fuel cell 34, the drawn current which is drawn from the fuel cell 34 has a value of 0 and the temperature of the fuel cell 34 is also unstable, it is impossible to detect excess or deficiency of the flow rate of the fuel which is introduced into the fuel cell 34. As described above, when the voltage output by the fuel cell 34 is larger than the "electricity generation enabling voltage" and the temperature of the fuel cell 34 is higher than the "electricity generation enabling temperature" (establishment of "electricity generation condition", and determination of YES in Step S54-2), and electricity is able to be generated in the fuel cell 34, the controller 15 (oxygen proportion changing section) changes the oxygen proportion of the gas introduced into the fuel cell 34 from the start correction oxygen proportion $\lambda 2$ to the electricity generation normal oxygen proportion $\lambda 3$ which is an oxygen proportion at a time of generating electricity in the fuel cell 34 (Step S64). Since even though the oxygen proportion $\lambda$ of the gas mixture which is introduced into the fuel cell 34 is changed to the electricity generation normal oxygen proportion $\lambda 3$, it is possible to detect excess or deficiency of a flow rate of fuel which is introduced into the fuel cell 34, based on the drawn current which is drawn from the fuel cell 34 or the temperature of the fuel cell 34 when electricity is generated in the fuel cell 34, it is possible to correct a flow rate of fuel which is introduced into the fuel cell 34. For this reason, it is possible to cause combustion in the combusting section 36 to be stably performed by correcting the flow rate of the fuel which is introduced into the fuel cell 34.

Overview of Second Ignition Processing

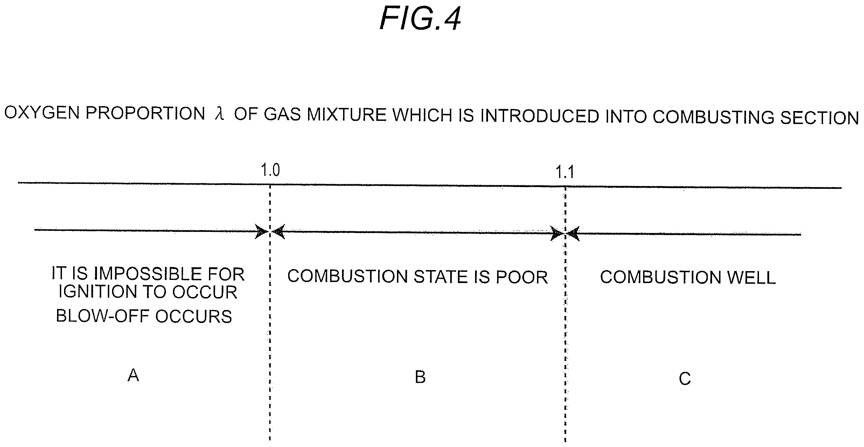

An overview of a "second ignition processing" will be described with reference to Fig. 4. The oxygen proportion $\lambda$ of the gas mixture introduced into the combusting section 36 causes ignition to occur in the combusting section 36. However, the combustion state in the combusting section 36 may be unstable. In this case, blow-off may occur in the combusting section 36 and a large amount of carbon monoxide may be discharged from the combusting section 36.

As illustrated in A of Fig. 4, when the oxygen proportion $\lambda$ of the gas mixture introduced into the combusting section 36 is lower than 1.0, it is impossible for ignition to occur in the combusting section 36. Otherwise, after success in ignition, blow-off occurs in the combusting section 36. As illustrated in B of Fig. 4, when the oxygen proportion $\lambda$ of the gas mixture introduced into the combusting section 36 is in a range of 1.0 to 1.1, the combustion state in the combusting section 36 is poor. As illustrated in C of Fig. 4, when the oxygen proportion $\lambda$ of the gas mixture introduced into the combusting section 36 is larger than 1.1, the combustion state in the combusting section 36 is good.

When ignition occurs in the combusting section 36, feedback control is performed on the flow rate of the raw reforming material introduced into the combusting section 36 by the raw material pump 11a5, based on the flow rate of the raw reforming material which is detected by the raw reforming material flow rate sensor 11a3. Feedback control is performed on the flow rate of the cathode air introduced into the combusting section 36 by the cathode air blower 11 c1, based on the flow rate of the cathode air which is detected by the cathode air flow rate sensor 11c2. In this manner, when ignition occurs in the combusting section 36, the oxygen proportion $\lambda$ of the gas mixture introduced into the combusting section 36 is held at a normal ignition oxygen proportion $\lambda a$ (for example, 1.14) which is slightly larger than 1.1.

However, a detection error of the raw reforming material flow rate sensor 11a3 or the cathode air flow rate sensor 11 c2 may cause an apparent oxygen proportion $\lambda$ of the gas mixture introduced into the combusting section 36 (that is, the oxygen proportion $\lambda$ controlled by the controller 15) to have a difference from an actual oxygen proportion $\lambda$ of the gas mixture introduced into the combusting section 36. Additionally, the actual oxygen proportion $\lambda$ of the gas mixture introduced into the combusting section 36 may have a difference from the normal ignition oxygen proportion $\lambda a$.

The oxygen proportion $\lambda$ of the gas mixture introduced into the combusting section 36 at the time of ignition is caused to be an oxygen proportion lower than the normal ignition oxygen proportion $\lambda a$ at the time of ignition by a predetermined value $\Delta \lambda 1$ (substantially 0.1), and it is checked whether or not ignition occurs in the combusting section 36. When ignition occurs in the combusting section 36, the oxygen proportion $\lambda$ of the gas mixture introduced into the combusting section 36 is caused to return to the normal ignition oxygen proportion $\lambda a$. In this manner, a reason for causing the oxygen proportion $\lambda$ of the gas mixture introduced into the combusting section 36 to be changed and causing the gas mixture introduced into the combusting section 36 to be ignited and combusted will be described below.

When ignition in the combusting section 36 is enabled by reducing the oxygen proportion $\lambda$ of the gas mixture introduced into the combusting section 36 so as to have a value smaller than the normal ignition oxygen proportion $\lambda a$ by the predetermined value $\Delta \lambda 1$ (substantially 0.1), the actual oxygen proportion $\lambda$ of the gas mixture introduced into the combusting section 36 is in the range of 1.0 to 1.1 (area of B illustrated in Fig. 4). In this case, in a state of being larger than the flow rate of the raw reforming material which corresponds to the normal ignition oxygen proportion $\lambda a$, by a defined flow rate $\Delta a$, the actual oxygen proportion $\lambda$ of the gas mixture introduced into the combusting section 36 is equal to or larger than 1.1 (area of C illustrated in Fig. 4). The actual oxygen proportion $\lambda$ of the gas mixture introduced into the combusting section 36 is the same as the normal ignition oxygen proportion $\lambda$a, and the combustion state in the combusting section 36 is good. After ignition in the combusting section 36, if the oxygen proportion $\lambda$ of the gas mixture introduced into the combusting section 36 is caused to return to the normal ignition oxygen proportion $\lambda$a, it is possible to maintain a good combustion state in the combusting section 36.

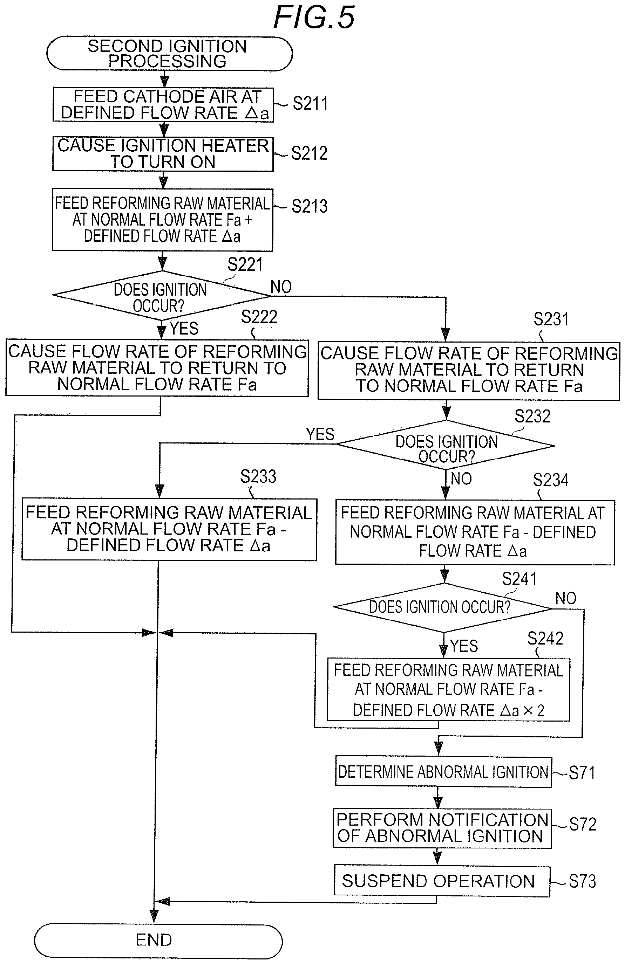

When the oxygen proportion $\lambda$ of the gas mixture introduced into the combusting section 36 is reduced so as to have a value smaller than the normal ignition oxygen proportion $\lambda$a by the predetermined value $\Delta\lambda$1 (substantially 0.1) and it is impossible for ignition to occur in the combusting section 36, the actual oxygen proportion $\lambda$ of the gas mixture introduced into the combusting section 36 is lower than 1.0 (area of A in Fig. 4) and the actual oxygen proportion $\lambda$ of the gas mixture introduced into the combusting section 36 is separated from the normal ignition oxygen proportion $\lambda$a toward a side of small values. For this reason, in a state before the oxygen proportion $\lambda$ of the gas mixture introduced into the combusting section 36 is reduced so as to have a value smaller than the normal ignition oxygen proportion $\lambda$a by the predetermined value $\Delta\lambda$1, there is a high probability of the actual oxygen proportion $\lambda$ of the gas mixture introduced into the combusting section 36 being in the range of 1,0 to 1.1 (area of B in Fig. 4), In this case, the oxygen proportion $\lambda$ of the gas mixture introduced into the combusting section 36 at the time of ignition is caused to be the normal ignition oxygen proportion $\lambda$a, and the gas mixture introduced into the combusting section 36 is ignited. After the gas mixture introduced into the combusting section 36 is ignited, the oxygen proportion $\lambda$ of the gas mixture introduced into the combusting section 36 is caused to increase by a predetermined value $\Delta\lambda$2 (substantially 0.1), and thereby the oxygen proportion $\lambda$ of the gas mixture which is actually introduced into the combusting section 36 has a value of larger than 1.1 (area of C in Fig. 4) and it is possible to maintain the good combustion state in the combusting section 36. The "second ignition processing" will be described below using a flowchart illustrated in Fig. 5.

Second Ignition Processing

If the operation of the fuel cell system 100 starts, the program proceeds to Step S211. In Step S211, the controller 15 controls the cathode air blower 11c1 to start to feed the cathode air. The controller 15 performs feedback control based on the flow rate of the cathode air which is detected by the cathode air flow rate sensor 11 c2, such that the flow rate of the cathode air which is fed to the combusting section 36 by the cathode air blower 11c1 becomes the defined flow rate. If a process of Step S211 is ended, the controller 15 causes the program to proceed to Step S212.

In Step S212, the controller 15 causes the ignition heaters 36a1 and 36a2 to turn ON and causes the program to proceed to Step S213.

In Step S213, the controller 15 controls the raw material pump 11a5 to start to feed the raw reforming material. The controller 15 performs feedback control based on the flow rate of the raw reforming material which is detected by the raw reforming material flow rate sensor 11a3, such that the flow rate of the raw reforming material which is fed to the combusting section 36 by the raw material pump 11 a5 is caused to be a flow rate obtained by adding the defined flow rate $\Delta$a to the normal flow rate Fa. Thus, the oxygen proportion $\lambda$ of the gas mixture introduced into the combusting section 36 has a value smaller than the normal ignition oxygen proportion $\lambda$a by the predetermined value $\Delta\lambda$1 (substantially 0.1). If a process of Step S213 is ended, the controller 15 causes the program to proceed to Step S221.

In Step S221, when the controller 15 determines that ignition occurs in the combusting section 36 (YES in Step S221), the controller 15 causes the program to proceed to Step S222. When the controller 15 determines that ignition does not occur in the combusting section 36 (NO in Step S221), the controller 15 causes the program to proceed to Step S231. A method of determining whether or not ignition occurs in the combusting section 36 is similar to the determination method of Step S31 illustrated in Fig. 2A.

In Step S222, the controller 15 performs feedback control based on the flow rate of the raw reforming material which is detected by the raw reforming material flow rate sensor 11a3, such that the flow rate of the raw reforming material which is fed to the combusting section 36 by the raw material pump 11 a5 is caused to be the normal flow rate Fa. Thus, the oxygen proportion $\lambda$ of the gas mixture introduced into the combusting section 36 becomes the normal ignition oxygen proportion $\lambda$a. If a process of Step S222 is ended, the "second ignition processing" is ended.

In Step S231, feedback control is performed based on the flow rate of the raw reforming material which is detected by the raw reforming material flow rate sensor 11 a3, such that the flow rate of the raw reforming material which is fed to the combusting section 36 by the raw material pump 11a5 is caused to be the normal flow rate Fa. Thus, the oxygen proportion $\lambda$ of the gas mixture introduced into the combusting section 36 becomes the normal ignition oxygen proportion $\lambda$a. In this state, it is checked again whether or not the gas mixture is ignited in the combusting section 36. If a process of Step S231 is ended, the controller 15 causes the program to proceed to Step S232.

In Step S232, when the controller 15 determines that ignition occurs in the combusting section 36 (YES in Step S232), the controller 15 causes the program to proceed to Step S233. When the controller 15 determines that ignition does not occur in the combusting section 36 (NO in Step S232), the controller 15 causes the program to proceed to Step S234. A method of determining whether or not ignition occurs in the combusting section 36 is similar to the determination method of Step S31 illustrated in Fig. 2A.

In Step S233, the controller 15 performs feedback control based on the flow rate of the raw reforming material which is detected by the raw reforming material flow rate sensor 11a3, such that the flow rate of the raw reforming material which is fed to the combusting section 36 by the raw material pump 11a5 is caused to be a flow rate obtained by subtracting the defined flow rate $\Delta$a from the normal flow rate Fa. Thus, the oxygen proportion $\lambda$ of the gas mixture introduced into the combusting section 36 has a value larger than the normal ignition oxygen proportion $\lambda$a by the predetermined value $\Delta\lambda2$ (substantially 0.1). If a process of Step S233 is ended, the "second ignition processing" is ended.

In this manner, when the raw reforming material having the flow rate obtained by adding the defined flow rate $\Delta$a to the normal flow rate Fa is fed to the combusting section 36 (Step S213), if ignition in the combusting section 36 fails (determination of NO in Step S221), the raw reforming material of the normal flow rate Fa is fed to the combusting section 36 (Step S231), and it is checked again whether or not the gas mixture is ignited in the combusting section 36. In this case, if ignition in the combusting section 36 succeeds, the raw reforming material having the flow rate obtained by subtracting the defined flow rate $\Delta$a from the normal flow rate Fa is fed to the combusting section 36 and combustion of the raw reforming material continues in the combusting section 36.

In Step S234, the controller 15 performs feedback control based on the flow rate of the raw reforming material which is detected by the raw reforming material flow rate sensor 11a3, such that the flow rate of the raw reforming material which is fed to the combusting section 36 by the raw material pump 11a5 is caused to be the flow rate obtained by subtracting the defined flow rate $\Delta$a from the normal flow rate Fa. Thus, the oxygen proportion $\lambda$ of the gas mixture introduced into the combusting section 36 has a value larger than the normal ignition oxygen proportion $\lambda$a by the predetermined value $\Delta\lambda2$ (substantially 0.1). In this state, it is checked again whether or not the gas mixture is ignited in the combusting section 36. If a process of Step S234 is ended, the controller 15 causes the program to proceed to Step S241.

In Step S241, when the controller 15 determines that ignition occurs in the combusting section 36 (YES in Step S241), the controller 15 causes the program to proceed to Step S242. When the controller 15 determines that ignition does not occur in the combusting section 36 (NO in Step S241), the controller 15 causes the program to proceed to Step S71. A method of determining whether or not ignition occurs in the combusting section 36 is similar to the determination method of Step S31 illustrated in Fig. 2A. In Step S241, when the controller 15 determines that ignition does not occur in the combusting section 36, the oxygen proportion $\lambda$ of the gas mixture introduced into the combusting section 36 is caused to be a "second defined oxygen proportion" which is threshold of the oxygen proportion which causes ignition of the gas mixture introduced into the combusting section 36 to be impossible.

In Step S242, the controller 15 performs feedback control based on the flow rate of the raw reforming material which is detected by the raw reforming material flow rate sensor 11a3, such that the flow rate of the raw reforming material which is fed to the combusting section 36 by the raw material pump 11a5 is caused to be a flow rate obtained by subtracting a flow rate of twice defined flow rate $\Delta$a from the normal flow rate Fa. Thus, the oxygen proportion $\lambda$ of the gas mixture introduced into the combusting section 36 has a value larger than the normal ignition oxygen proportion $\lambda$a by a predetermined value $\Delta\lambda3$ (substantially 0.2). If a process of Step S233 is ended, the "second ignition processing" is ended.

Since processes of Steps S71, 72 and 73 are the same as the processes of Steps S71, 72 and 73 in the "first ignition processing" illustrated in Fig. 2A, descriptions thereof will be omitted.

In this manner, when the raw reforming material having the flow rate obtained by subtracting the defined flow rate $\Delta$a from the normal flow rate Fa is fed to the combusting section 36 (Step S234), if ignition in the combusting section 36 fails (determination of NO in Step S241), abnormality of ignition is determined in Step S71, and the notifying section 17 performs notification of abnormality of ignition in Step S72. In Step S73, the operation of the fuel cell system 100 is suspended.

Advantage obtained by Executing the Second Ignition Processing

As apparent from the above description, if the "second ignition processing" is executed, the oxygen proportion of the gas introduced into the combusting section 36 is gradually changed from a low state to a high state and it is checked whether or not ignition occurs in the combusting section 36. For this reason, even though the composition of the raw reforming material is changed, and the oxygen proportion $\lambda$ which enables ignition and combustion in the combusting section 36 is changed, it is possible to perform ignition of the raw reforming material in the combusting section 36.

The controller 15 (oxygen proportion adjusting section) causes the oxygen proportion $\lambda$ of the gas mixture introduced into the combusting section 36 at the time of ignition to be an oxygen proportion lower than the normal ignition oxygen proportion $\lambda$a at the time of ignition by the predetermined value $\Delta\lambda1$ (substantially 0.1) which enables ignition and combustion in the combusting section 36 (Step S213). When the controller 15 determines that ignition occurs in the combusting section 36 (determination of YES in Step S221), the controller 15 (oxygen proportion adjusting section) causes the oxygen proportion $\lambda$ of the gas mixture introduced into the combusting section 36 at the time of ignition to return to the normal ignition oxygen proportion λa (Step S222). Advantages obtained by this will be described below.

The apparent oxygen proportion λ which is adjusted by the controller 15 (oxygen proportion adjusting section) may have a difference from the actual oxygen proportion λ of the gas mixture which is introduced into the combusting section 36, due to the detection error of the raw reforming material flow rate sensor 11a3 or the cathode air flow rate sensor 11c2. When the controller 15 (oxygen proportion adjusting section) causes the oxygen proportion λ to be the oxygen proportion which is lower than the normal ignition oxygen proportion λa by the predetermined value Δλ1 (substantially 0,1) which enables ignition and combustion in the combusting section 36 (Step S213), and ignition of the gas mixture in the combusting section 36 is impossible (determination of NO in Step S221), the actual oxygen proportion λ of the gas introduced into the combusting section 36 is caused to be an oxygen proportion which is lower than the oxygen proportion λ (apparent oxygen proportion) which is changed by the controller 15 and causes combustion in the combusting section 36 to be impossible. In this case, the oxygen proportion λ of the gas mixture introduced into the combusting section 36 at the time of ignition is caused to be the normal ignition oxygen proportion λa (Step S231), and the gas mixture introduced into the combusting section 36 is ignited. When the gas mixture can be ignited in the combusting section 36 (determination of YES in Step S232), the oxygen proportion λ of the gas mixture which is actually introduced into the combusting section 36 is caused to be larger than 1.1 (area of C in Fig. 4) by causing the oxygen proportion λ of the gas mixture introduced into the combusting section 36 to be larger than the oxygen proportion of the gas mixture introduced into the combusting section 36 at the time of ignition by the predetermined value Δλ2 (substantially 0.1) (Step S233), and thus it is possible to maintain the good combustion state in the combusting section 36.

When the oxygen proportion λ of the gas mixture introduced into the combusting section 36 at the time of ignition is caused to be the normal ignition oxygen proportion λa (Step S231), and ignition of the gas mixture introduced into the combusting section 36 does not occur (determination of NO in Step S232), the actual oxygen proportion λ of the gas mixture introduced into the combusting section 36 is caused to be an oxygen proportion which is significantly lower than the oxygen proportion λ (apparent oxygen proportion) to be controlled by the controller 15, and causes combustion in the combusting section 36 to be impossible. The oxygen proportion λ of the gas mixture introduced into the combusting section 36 at the time of ignition is caused to be larger than the normal ignition oxygen proportion λa by the predetermined value Δλ2 (substantially 0.1) (Step S234) and the gas mixture introduced into the combusting section 36 is ignited. In this case, when the gas mixture introduced into the combusting section 36 is ignited (determination of YES in Step S241), the oxygen proportion λ of the gas mixture introduced into the combusting section 36 is caused to be much larger than the oxygen proportion at the time of ignition (Step S242), and thus it is possible to maintain the good combustion state in the combusting section 36.

When the controller 15 (oxygen proportion adjusting section) causes the oxygen proportion λ to be the oxygen proportion λ which is lower than the normal ignition oxygen proportion λa by the predetermined value Δλ1 (substantially 0.1) which enables ignition and combustion in the combusting section 36 (Step S213), and ignition can occur in the combusting section 36 (determination of YES in Step S221), the actual oxygen proportion λ of the gas introduced into the combusting section 36 and the oxygen proportion λ (apparent oxygen proportion) changed by the controller 15 are not separated from each other. For this reason, the controller 15 (oxygen proportion adjusting section) changes the oxygen proportion from the ignition correction oxygen proportion λ1 to the normal ignition oxygen proportion λa (Step S222), and thus it is possible to maintain the good combustion state in the combusting section 36.

When the oxygen proportion λ of the gas mixture introduced into the combusting section 36 is equal to or larger than the "second defined oxygen proportion" which is threshold of the oxygen proportion which causes ignition in the combusting section 36 to be impossible (determination of NO in Step S241), abnormality of ignition is determined (Step S71), and the notifying section 17 performs notification of abnormality of ignition (Step S72). For this reason, a user of the fuel cell system 100 can recognize abnormality of ignition occurring due to other factors which cause ignition in the combusting section 36 to be impossible, for example, trouble in the raw reforming material flow rate sensor 11a3 or the cathode air flow rate sensor 11c2, and the like other than the oxygen proportion λ.

Other Embodiments

An embodiment in which, in Step S23, the controller 15 changes the flow rate of the raw reforming material fed by the raw material pump 11a5 to the changed flow rate Na1 obtained by performing a change to the Expression 1 and computation with the following Expression 2 may be made.

$$Na1 = Na + \Delta A \times m \quad \text{(Expression 2)}$$

where, Na1: changed flow rate, Na: ignition initial flow rate, ΔA: defined increase flow rate, and m: counter.

In the above-described embodiment, the catalytic combustor temperature sensor 28b detects the temperature T2 of the catalytic combustor 28. However, an embodiment in which the catalytic combustor temperature sensor 28b detects the temperature T2 of the exhaust gas which is exhausted from the catalytic combustor 28 and transmits a detection result to the controller 15 may be made.

An embodiment may be made in which when either of the conditions is established, the program proceeds to Step S64 in Step S63 of Figs. 2A and 2B or Step S54-2 of Fig. 2B, and the conditions include a condition in which the temperature of the cell 34a (fuel cell 34) is equal to or higher than the "electricity generation enabling temperature", and a condition in which the voltage output by the cell 34a is equal to or larger than the electricity generation enabling voltage.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive.

**Claims**

1. A fuel cell system (100) comprising:

   a reforming section (33) that generates fuel from water for reforming and a raw reforming material;
   a reforming-section temperature detecting section (33a) that detects a temperature of the reforming section (33);
   a raw reforming material feeding section (11a5) that feeds the raw reforming material to the reforming section (33);
   a fuel cell (34) that generates electricity using the fuel and an oxidant gas;
   a combusting section (36) that combusts a combustible component discharged from a fuel electrode of the fuel cell (34) using the oxidant gas;
   an ignition device (36a2) that causes the combustible component fed to the combusting section (36) to be ignited;
   an oxygen proportion adjusting section that adjusts an oxygen proportion ($\lambda$) of the gas which is introduced into the combusting section (36) when the combustible component is ignited in the ignition device (36a2), to become a correction oxygen proportion ($\lambda 1$, $\lambda 2$) which allows the combustible component to be ignited and combusted; and
   an oxygen proportion changing section that changes the oxygen proportion ($\lambda$) from the correction oxygen proportion ($\lambda 1$, $\lambda 2$) to a normal oxygen proportion ($\lambda 2$-2) when a defined condition is satisfied,
   **characterized by**
   a combustion section temperature sensor (36b) that detects a temperature of the combusting section (36); and
   an ignition and combustion determining section that determines whether or not ignition or combustion occurs in the combusting section (36),
   wherein the oxygen proportion adjusting section lowers the correction oxygen proportion ($\lambda 1$, $\lambda 2$) every time the ignition and combustion determining section determines that ignition does not occur or that blow-off occurs in the combusting section (36),
   wherein after ignition in the combusting section (36) succeeds and if a starting condition is established, the oxygen proportion changing section changes the oxygen proportion ($\lambda$) to the start correction oxygen proportion ($\lambda 2$), the starting condition being a case where a temperature detected by the combustion section temperature sensor (36b) is equal to or higher than a start temperature, or a case where a change amount of the combustion section temperature sensor (36b) per unit time is equal to or greater than a start change amount, and
   wherein the oxygen proportion changing section changes the oxygen proportion ($\lambda$) from the start correction oxygen proportion ($\lambda 2$) to the normal oxygen proportion ($\lambda 2$-2) larger than the start correction oxygen proportion ($\lambda 2$) when the temperature detected by the reforming-section temperature detecting section (33a) is equal to or greater than a defined temperature.

2. The fuel cell system according to claim 1, wherein the oxygen proportion adjusting section sets the correction oxygen proportion ($\lambda 1$, $\lambda 2$) of the gas to be the maximum amount which allows the gas to be ignited and combusted in the combusting section (36), in an initial state where the gas introduced into the combusting section (36) is ignited and combusted.

3. The fuel cell system according to claim 1 or 2, further comprising:

   an operation suspending section that suspends feeding of the raw reforming material to the reforming section (33) by the raw reforming material feeding section (11a5) when the correction oxygen proportion ($\lambda 1$, $\lambda 2$) changed by the oxygen proportion adjusting section is equal to or less than a defined oxygen proportion.

4. The fuel cell system according to any one of claims 1 to 3, further comprising:

an abnormality determining section that determines abnormality when the ignition and combustion determining section determines that ignition does not occur or when the correction oxygen proportion ($\lambda1$, $\lambda2$) changed by the oxygen proportion adjusting section is equal to or less than a defined oxygen proportion.

5. The fuel cell system according to any one of claims 1 to 4, further comprising:

a catalytic combustor (28) to which a combustion gas containing a combustible component which is discharged from the combusting section (36) and is not combusted is introduced and which causes the combustible component contained in the combustion gas to be combusted through a catalytic reaction; and
a catalytic combustor temperature detecting section (36b) that detects a temperature of the catalytic combustor (28) or a temperature of an exhaust gas which is exhausted from the catalytic combustor (28),
wherein the oxygen proportion changing section changes the oxygen proportion ($\lambda$) from the correction oxygen proportion ($\lambda1$, $\lambda2$) to the normal oxygen proportion ($\lambda2-2$) when a temperature detected by the catalytic combustor temperature detecting section (36b) is equal to or greater than an abnormal temperature.

6. The fuel cell system according to any one of claims 1 to 5, further comprising:

at least one of a voltage detecting section (13) that detects a voltage output by the fuel cell (34), and a fuel cell temperature detecting section (34a1) that detects a temperature of the fuel cell (34),
wherein the oxygen proportion changing section changes the oxygen proportion ($\lambda$) from the correction oxygen proportion ($\lambda1$, $\lambda2$) to the normal oxygen proportion ($\lambda2-2$) when at least one of conditions is established, the conditions including a condition in which a voltage which is output by the fuel cell (34) and is detected by the voltage detecting section (13) is equal to or greater than an electricity generation enabling voltage, and a condition in which a temperature of the fuel cell (34) which is detected by the fuel cell temperature detecting section (34a1) is equal to or greater than an electricity generation enabling temperature.

## Patentansprüche

1. Brennstoffzellensystem (100) mit:

einem Reformierabschnitt (33), der aus Wasser zum Reformieren und einem Ausgangsreformiermaterial Brennstoff erzeugt;
einem Reformierabschnitt-Temperaturerfassungsabschnitt (33a), der eine Temperatur des Reformierabschnitts (33) erfasst;
einem Ausgangsreformiermaterial-Einspeiseabschnitt (11a5), der das Ausgangsreformiermaterial in den Reformierabschnitt (33) einspeist;
einer Brennstoffzelle (34), die unter Verwendung des Brennstoffs und eines Oxidationsmittelgases Elektrizität erzeugt;
einem Verbrennungsabschnitt (36), der unter Verwendung des Oxidationsmittelgases einen brennbaren Bestandteil verbrennt, der von einer Brennstoffelektrode der Brennstoffzelle (34) abgegeben wird;
einer Zündvorrichtung (36a2), die den brennbaren Bestandteil, der in den Verbrennungsabschnitt (36) eingespeist wird, dazu bringt, gezündet zu werden;
einem Sauerstoffanteil-Einstellabschnitt, der einen Sauerstoffanteil ($\lambda$) des Gases, das in den Verbrennungsabschnitt (36) eingeleitet wird, wenn der brennbare Bestandteil in der Zündvorrichtung (36a2) gezündet wird, so einstellt, dass er ein Korrektursauerstoffanteil ($\lambda1$, $\lambda2$) wird, der dem brennbaren Bestandteil ermöglicht, gezündet und verbrannt zu werden; und
einem Sauerstoffanteil-Änderungsabschnitt, der den Sauerstoffanteil ($\lambda$) von dem Korrektursauerstoffanteil ($\lambda1$, $\lambda2$) aus zu einem normalen Sauerstoffanteil ($\lambda2-2$) ändert, wenn eine definierte Bedingung erfüllt ist,
**gekennzeichnet durch**
einen Verbrennungsabschnitt-Temperatursensor (36b), der eine Temperatur des Verbrennungsabschnitts (36) erfasst; und
einen Zündungs- und Verbrennungsfeststellabschnitt, der feststellt, ob in dem Verbrennungsabschnitt (36) eine Zündung oder Verbrennung stattfindet,
wobei der Sauerstoffanteil-Einstellabschnitt den Korrektursauerstoffanteil ($\lambda1$, $\lambda2$) jedes Mal senkt, wenn der Zündungs- und Verbrennungsfeststellabschnitt feststellt, dass keine Zündung stattfindet oder dass im Verbrennungsabschnitt (36) Ausblasen auftritt,

wobei, nachdem im Verbrennungsabschnitt (36) eine Zündung gelungen ist und falls eine Startbedingung hergestellt ist, der Sauerstoffanteil-Änderungsabschnitt den Sauerstoffanteil (λ) zum Startkorrektursauerstoffanteil (λ2) ändert, wobei die Startbedingung ein Fall, in dem eine Temperatur, die **durch** den Verbrennungsabschnitt-Temperatursensor (36b) erfasst wird, größer oder gleich einer Starttemperatur ist, oder ein Fall ist, in dem ein Änderungsbetrag des Verbrennungsabschnitt-Temperatursensors (36b) pro Zeiteinheit größer oder gleich einem Startänderungsbetrag ist, und

wobei der Sauerstoffanteil-Änderungsabschnitt den Sauerstoffanteil (λ) vom Startkorrektursauerstoffanteil (λ2) aus zum normalen Sauerstoffanteil (λ2-2) ändert, der größer als der Startkorrektursauerstoffanteil (λ2) ist, wenn die Temperatur, die **durch** den Reformierabschnitt-Temperaturerfassungsabschnitt (33a) erfasst wird, größer oder gleich einer definierten Temperatur ist.

2. Brennstoffzellensystem nach Anspruch 1, wobei
der Sauerstoffanteil-Einstellabschnitt in einem Anfangszustand, in dem das in dem Verbrennungsabschnitt (36) eingeleitete Gas gezündet und verbrannt wird, den Korrektursauerstoffanteil (λ1, λ2) des Gases auf die maximale Menge einstellt, die dem Gas ermöglicht, in dem Verbrennungsabschnitt (36) gezündet und verbrannt zu werden.

3. Brennstoffzellensystem nach Anspruch 1 oder 2, mit zudem:

einem Betriebsunterbrechungsabschnitt, der die Einspeisung des Ausgangsreformiermaterials in den Reformierabschnitt (33) durch den Ausgangsreformiermaterial-Einspeiseabschnitt (11a5) unterbricht, wenn der durch den Sauerstoffanteil-Einstellabschnitt geänderte Korrektursauerstoffanteil (λ1, λ2) kleiner oder gleich einem definierten Sauerstoffanteil ist.

4. Brennstoffzellensystem nach einem der Ansprüche 1 bis 3, mit zudem:

einem Abnormalitätsfeststellabschnitt, der eine Abnormalität feststellt, wenn der Zündungs- und Verbrennungsfeststellabschnitt feststellt, dass keine Zündung stattfindet, oder wenn der durch den Sauerstoffanteil-Einstellabschnitt geänderte Korrektursauerstoffanteil (λ1, λ2) kleiner oder gleich einem definierten Sauerstoffanteil ist.

5. Brennstoffzellensystem nach einem der Ansprüche 1 bis 4, mit zudem:

einem katalytischen Brenner (28), in den ein Verbrennungsgas, das einen brennbaren Bestandteil enthält, der vom Verbrennungsabschnitt (36) abgegeben wird und nicht verbrannt ist, eingeleitet wird und der den im Verbrennungsgas enthaltenen brennbaren Bestandteil dazu bringt, mittels einer katalytischen Reaktion verbrannt zu werden; und
einem die Temperatur des katalytischen Brenners erfassenden Abschnitt (36b), der eine Temperatur des katalytischen Brenners (28) oder eine Temperatur eines Abgases, das vom katalytischen Brenner (28) ausgestoßen wird, erfasst,
wobei der Sauerstoffanteil-Änderungsabschnitt den Sauerstoffanteil (λ) vom Korrektursauerstoffanteil (λ1, λ2) aus zum normalen Sauerstoffanteil (λ2-2) ändert, wenn eine Temperatur, die durch den die Temperatur des katalytischen Brenners erfassenden Abschnitt (36b) erfasst wird, größer oder gleich einer abnormalen Temperatur ist.

6. Brennstoffzellensystem nach einem der Ansprüche 1 bis 5, mit zudem:

einem Spannungserfassungsabschnitt (13), der eine Spannungsabgabe durch die Brennstoffzelle (34) erfasst, und/oder einem Brennstoffzellentemperatur-Erfassungsabschnitt (34a1), der eine Temperatur der Brennstoffzelle (34) erfasst,
wobei der Sauerstoffanteil-Änderungsabschnitt den Sauerstoffanteil (λ) vom Korrektursauerstoffanteil (λ1, λ2) aus zum normalen Sauerstoffanteil (λ2-2) ändert, wenn mindestens eine von mehreren Bedingungen hergestellt ist, wobei die Bedingungen eine Bedingung, bei der eine Spannung, die von der Brennstoffzelle (34) abgegeben wird und durch den Spannungserfassungsabschnitt (13) erfasst wird, größer oder gleich einer die Elektrizitätserzeugung ermöglichenden Spannung ist, und eine Bedingung, bei der eine Temperatur der Brennstoffzelle (34), die durch den Brennstoffzellentemperatur-Erfassungsabschnitt (34a1) erfasst wird, größer oder gleich einer die Elektrizitätserzeugung ermöglichenden Temperatur ist, einschließen.

**Revendications**

1. Système de pile à combustible (100) comprenant :

   une section de reformage (33) qui produit du combustible à partir d'eau de reformage et d'une matière première de reformage ;
   une section de détection de température de section de reformage (33a) qui détecte une température de la section de reformage (33) ;
   une section d'alimentation en matière première de reformage (11a5) qui alimente la section de reformage (33) en matière première de reformage ;
   une pile à combustible (34) qui produit de l'électricité à l'aide du combustible et d'un gaz oxydant ;
   une section de combustion (36) qui brûle un composant combustible dégagé par une électrode à combustible de la pile à combustible (34), à l'aide du gaz oxydant ;
   un dispositif d'allumage (36a2) qui fait s'enflammer le composant combustible alimentant la section de combustion (36) ;
   une section de réglage de proportion d'oxygène qui règle une proportion d'oxygène ($\lambda$) du gaz qui est introduit dans la section de combustion (36), lorsque le composant combustible s'enflamme dans le dispositif d'allumage (36a2), pour qu'elle devienne une proportion d'oxygène de correction ($\lambda1$, $\lambda2$) qui permet au composant combustible de s'enflammer et de brûler ; et
   une section de modification de proportion d'oxygène qui fait passer la proportion d'oxygène ($\lambda$) de la proportion d'oxygène de correction ($\lambda1$, $\lambda2$) à une proportion normale d'oxygène ($\lambda2$-2), lorsqu'une condition définie est satisfaite,
   **caractérisé par** :

   un capteur de température de section de combustion (36b) qui détecte une température de la section de combustion (36) ; et
   une section de détermination d'allumage et de combustion qui détermine si l'allumage ou la combustion a lieu ou non dans la section de combustion (36),
   dans lequel la section de réglage de proportion d'oxygène abaisse la proportion d'oxygène de correction ($\lambda1$, $\lambda2$) à chaque fois que la section de détermination d'allumage et de combustion détermine que l'allumage n'a pas lieu ou qu'une extinction a lieu dans la section de combustion (36),
   dans lequel après que l'allumage dans la section de combustion (36) a réussi et qu'une condition de démarrage a été établie, la section de modification de proportion d'oxygène fait passer la proportion d'oxygène ($\lambda$) à la proportion d'oxygène de correction de démarrage ($\lambda2$), la condition de démarrage étant un cas où une température détectée par le capteur de température de section de combustion (36b) est supérieure ou égale à une température de démarrage, ou un cas où une grandeur de variation du capteur de température de section de combustion (36b) par unité de temps est supérieure ou égale à une grandeur de variation de démarrage, et
   dans lequel la section de modification de proportion d'oxygène fait passer la proportion d'oxygène ($\lambda$) de la proportion d'oxygène de correction de démarrage ($\lambda2$) à la proportion normale d'oxygène ($\lambda2$-2) supérieure à la proportion d'oxygène de correction de démarrage ($\lambda2$), lorsque la température détectée par la section de détection de température de section de reformage (33a) est supérieure ou égale à une température définie.

2. Système de pile à combustible selon la revendication 1, dans lequel :

   la section de réglage de proportion d'oxygène règle la proportion d'oxygène de correction ($\lambda1$, $\lambda2$) du gaz à la quantité maximale qui permet au gaz de s'enflammer et de brûler dans la section de combustion (36), dans un état initial où le gaz introduit dans la section de combustion (36) s'enflamme et brûle.

3. Système de pile à combustible selon la revendication 1 ou 2, comprenant en outre :

   une section de suspension de fonctionnement qui suspend l'alimentation de la section de reformage (33) en matière première de reformage par la section d'alimentation en matière première de reformage (11a5), lorsque la proportion d'oxygène de correction ($\lambda1$, $\lambda2$) modifiée par la section de réglage de proportion d'oxygène est inférieure ou égale à une proportion d'oxygène définie.

4. Système de pile à combustible selon l'une quelconque des revendications 1 à 3, comprenant en outre :

une section de détermination d'anomalie qui détermine une anomalie lorsque la section de détermination d'allumage et de combustion détermine que l'allumage n'a pas lieu ou lorsque la proportion d'oxygène de correction ($\lambda 1$, $\lambda 2$) modifiée par la section de réglage de proportion d'oxygène est inférieure ou égale à une proportion d'oxygène définie.

5. Système de pile à combustible selon l'une quelconque des revendications 1 à 4, comprenant en outre :

une chambre de combustion catalytique (28) dans laquelle un gaz de combustion contenant un composant combustible qui est rejeté par la section de combustion (36) et qui n'est pas brûlé est introduit, et qui fait que le composant combustible contenu dans le gaz de combustion soit brûlé au moyen d'une réaction catalytique ; et une section de détection de température de chambre de combustion catalytique (36b) qui détecte une température de la chambre de combustion catalytique (28) ou une température de gaz d'échappement qui s'échappe de la chambre de combustion catalytique (28),

dans lequel la section de modification de proportion d'oxygène fait passer la proportion d'oxygène ($\lambda$) de la proportion d'oxygène de correction ($\lambda 1$, $\lambda 2$) à la proportion normale d'oxygène ($\lambda 2$-2), lorsqu'une température détectée par la section de détection de température de chambre de combustion catalytique (36b) est supérieure ou égale à une température anormale.

6. Système de pile à combustible selon l'une quelconque des revendications 1 à 5, comprenant en outre :

une section de détection de tension (13) qui détecte une tension délivrée par la pile à combustible (34) et/ou une section de détection de température de pile à combustible (34a1) qui détecte une température de la pile à combustible (34),

dans lequel la section de modification de proportion d'oxygène fait passer la proportion d'oxygène ($\lambda$) de la proportion d'oxygène de correction ($\lambda 1$, $\lambda 2$) à la proportion normale d'oxygène ($\lambda 2$-2), lorsqu'au moins l'une des conditions est établie, les conditions incluant une condition dans laquelle une tension qui est délivrée par la pile à combustible (34) et qui est détectée par la section de détection de tension (13) est supérieure ou égale à une tension permettant la production d'électricité, et une condition dans laquelle une température de la pile à combustible (34) qui est détectée par la section de détection de température de pile à combustible (34a1) est supérieure ou égale à une température permettant la production d'électricité.

*FIG.1*

EP 2 963 714 B1

# FIG.2A

```
        ( FIRST IGNITION PROCESSING )
                      │                                              ┌──── YES
                      ▼                                              │          S42
        ┌──────────────────────────┐  ~S11                    ◇─────────────◇── NO ──┐
        │         PURGE AIR         │                          COUNTER m < ma?        │
        └──────────────────────────┘                              ▲                    │
                      │                                           │          S41        │
                      ▼                                  ┌──────────────────────┐       │
        ┌──────────────────────────┐  ~S12             │   ADD 1 TO COUNTER m   │       │
        │  CAUSE IGNITION HEATER    │                   └──────────────────────┘        │
        │        TO TURN ON         │                              ▲                     │
        └──────────────────────────┘                              │                     │
                      │            S21   NO                        │                     │
                      ◇──────────────────────────────┐            │                     │
                 COUNTER m=0?                          │            │                     │
                      │ YES        S22                 │    S23     │                     │
                      ▼                                ▼            │                     │
   ┌──────────────────────────────────┐  ┌────────────────────────────────────┐          │
   │ CAUSE FLOW RATE OF REFORMING RAW  │  │ CHANGE FLOW RATE OF REFORMING RAW   │          │
   │ MATERIAL TO BECOME IGNITION       │  │ MATERIAL TO CHANGED FLOW RATE       │          │
   │ INITIAL FLOW RATE Na AND          │  │ COMPUTED WITH Na×ΔNa×m AND CHANGE    │          │
   │ CAUSE FLOW RATE OF CATHODE AIR TO │  │ FLOW RATE OF CATHODE AIR TO IGNITION │          │
   │ BECOME IGNITION INITIAL FLOW      │  │ INITIAL FLOW RATE Aa (DECREASE       │          │
   │ RATE Aa (SET IGNITION CORRECTION  │  │ IGNITION CORRECTION OXYGEN           │          │
   │ OXYGEN PROPORTION λ1)             │  │ PROPORTION λ1)                      │          │
   └──────────────────────────────────┘  └────────────────────────────────────┘          │
                      │            S31   NO                                               │
                      ◇──────────────────────────────────────────────►                   │
                 DOES IGNITION OCCUR?                                                      │
                      │ YES                                                               │
                      ▼                                                                    │
                      ◇─────────◇ S51    NO       YES                                      │
              IS START CONDITION ESTABLISHED?  ─────────┐                                  │
                      │ YES                             │                                  │
                      ▼           S52                   │                                  │
   ┌──────────────────────────────────┐                │                                  │
   │ CHANGE FLOW RATE OF REFORMING RAW │                │                                  │
   │ MATERIAL TO START CORRECTION RAW  │                │                                  │
   │ MATERIAL FLOW RATE Nb1 COMPUTED   │                │      S63                          │
   │ WITH Nb×ΔNb×m AND CHANGE FLOW     │                ▼   ◇────────────────◇              │
   │ RATE OF CATHODE AIR TO START      │         IS ELECTRICITY GENERATION    NO           │
   │ CATHODE AIR FLOW RATE Ab (SET     │         CONDITION ESTABLISHED? ──────────┐        │
   │ START CORRECTION OXYGEN           │                │ YES                     │        │
   │ PROPORTION λ2)                    │                ▼                         │        │
   └──────────────────────────────────┘    ┌────────────────────────────┐  ~S64  │        │
                      │      S53  YES       │ PERFORM CHANGE TO ELECTRICITY│       │        │
                      ◇───────────────►     │ GENERATION NORMAL OXYGEN     │       │        │
               DOES BLOW-OFF OCCUR?         │ PROPORTION λ3                │       │        │
                      │ NO                  └────────────────────────────┘        │        │
                      ◇────────◇ S54   NO                                          │        │
              IS DEFINED CONDITION ────────┐                                       │        │
                 ESTABLISHED?              │                                       │        │
                      │ YES    S55         │                                       │        │
                      ▼                    │                                       ▼        │
   ┌──────────────────────────────────┐   │      ┌──────────────────────────────┐          │
   │ CAUSE FLOW RATE OF REFORMING RAW  │   │      │ DETERMINE ABNORMAL IGNITION  │~S71 ◄────┘
   │ MATERIAL AND FLOW RATE OF CATHODE │   │      └──────────────────────────────┘
   │ AIR TO BECOME START NORMAL FLOW   │   │                   │
   │ RATE (PERFORM CHANGE TO START     │   │      ┌──────────────────────────────┐
   │ NORMAL OXYGEN PROPORTION λ2-2)    │   │      │ PERFORM NOTIFICATION OF       │~S72
   └──────────────────────────────────┘   │      │ ABNORMAL IGNITION             │
                      │                    │      └──────────────────────────────┘
                      │                    │                   │
                      ▼                    ▼      ┌──────────────────────────────┐
   ┌──────────────────────────────────┐   │      │      SUSPEND OPERATION        │~S73
   │      SET COUNTER m to 0           │~S65      └──────────────────────────────┘
   └──────────────────────────────────┘
                      │
                      ▼
                  (  END  )
```

## FIG.2B

```
FIRST IGNITION PROCESSING
          │
          ▼
┌──────────────────────┐
│      PURGE AIR       │─S11
└──────────────────────┘
          │
          ▼
┌──────────────────────┐
│ CAUSE IGNITION HEATER│─S12
│     TO TURN ON       │
└──────────────────────┘
          │  S21
          ▼         NO
   ◇ COUNTER m=0? ◇──────►
          │ YES
          ▼  S22
┌──────────────────────────────────┐
│ CAUSE FLOW RATE OF REFORMING RAW  │
│ MATERIAL TO BECOME IGNITION       │
│ INITIAL FLOW RATE Na AND CAUSE    │
│ FLOW RATE OF CATHODE AIR TO BECOME│
│ IGNITION INITIAL FLOW RATE Aa (SET│
│ IGNITION CORRECTION OXYGEN        │
│ PROPORTION λ1)                    │
└──────────────────────────────────┘
```

S42 — COUNTER m < ma — YES / NO

S41 — ADD 1 TO COUNTER m

S23 — CHANGE FLOW RATE OF REFORMING RAW MATERIAL TO CHANGED FLOW RATE COMPUTED WITH Na×△Na×m AND CHANGE FLOW RATE OF CATHODE AIR TO IGNITION INITIAL FLOW RATE Aa (DECREASE IGNITION CORRECTION OXYGEN PROPORTION λ1)

S31 — DOES IGNITION OCCUR? — NO / YES

S51 — IS START CONDITION ESTABLISHED? — NO / YES

S52 — CHANGE FLOW RATE OF REFORMING RAW MATERIAL TO START CORRECTION RAW MATERIAL FLOW RATE Nb1 COMPUTED WITH Nb×△ Nb×m AND CHANGE FLOW RATE OF CATHODE AIR TO START CATHODE AIR FLOW RATE Ab (SET START CORRECTION OXYGEN PROPORTION λ2)

S53 — DOES BLOW-OFF OCCUR? — YES / NO

S54 — IS DEFINED CONDITION ESTABLISHED? — YES / NO

S54-2 — IS ELECTRICITY GENERATION CONDITION ESTABLISHED? — YES / NO

S55 — CAUSE FLOW RATE OF REFORMING RAW MATERIAL AND FLOW RATE OF CATHODE AIR TO BECOME START NORMAL FLOW RATE (PERFORM CHANGE TO START NORMAL OXYGEN PROPORTION λ2-2)

S63 — IS ELECTRICITY GENERATION CONDITION ESTABLISHED? — NO / YES

S64 — PERFORM CHANGE TO ELECTRICITY GENERATION NORMAL OXYGEN PROPORTION λ3

S71 — DETERMINE ABNORMAL IGNITION

S72 — PERFORM NOTIFICATION OF ABNORMAL IGNITION

S73 — SUSPEND OPERATION

S65 — SET COUNTER m to 0

END

## FIG.3

Legend: CH4 ......, H2 ——, CO2 —··—··—, CO —···—···—

COMPOSITION OF REFORMING GAS (%) vs. TEMPERATURE OF REFORMING SECTION (°C)

## FIG.4

OXYGEN PROPORTION $\lambda$ OF GAS MIXTURE WHICH IS INTRODUCED INTO COMBUSTING SECTION

| 1.0 | 1.1 |
| --- | --- |

IT IS IMPOSSIBLE FOR IGNITION TO OCCUR BLOW-OFF OCCURS | COMBUSTION STATE IS POOR | COMBUSTION WELL

A       B       C

EP 2 963 714 B1

## FIG.5

```
        ┌─────────────────────────┐
        │    SECOND IGNITION       │
        │      PROCESSING          │
        └─────────────────────────┘
                    │
        ┌─────────────────────────┐
        │  FEED CATHODE AIR AT     │── S211
        │ DEFINED FLOW RATE △a     │
        └─────────────────────────┘
                    │
        ┌─────────────────────────┐
        │ CAUSE IGNITION HEATER    │── S212
        │      TO TURN ON          │
        └─────────────────────────┘
                    │
        ┌──────────────────────────┐
        │FEED REFORMING RAW MATERIAL│── S213
        │  AT NORMAL FLOW RATE Fa + │
        │   DEFINED FLOW RATE △a    │
        └──────────────────────────┘
                    │       S221
               ◇─────────────◇      NO
              < DOES IGNITION  >──────────────────────┐
               ◇   OCCUR?     ◇                        │
                    │YES   S222                       S231
        ┌──────────────────────┐          ┌──────────────────────┐
        │CAUSE FLOW RATE OF     │          │CAUSE FLOW RATE OF     │
        │REFORMING RAW MATERIAL │          │REFORMING RAW MATERIAL │
        │TO RETURN TO NORMAL    │          │TO RETURN TO NORMAL    │
        │FLOW RATE Fa           │          │FLOW RATE Fa           │
        └──────────────────────┘          └──────────────────────┘
              │                                   │        S232
              │                      YES    ◇──────────────◇
              │          ┌────────────────< DOES IGNITION  >
              │          │                 ◇    OCCUR?     ◇
              │        S233                      │NO    S234
              │  ┌──────────────────┐     ┌──────────────────┐
              │  │FEED REFORMING RAW│     │FEED REFORMING RAW│
              │  │MATERIAL AT NORMAL│     │MATERIAL AT NORMAL│
              │  │FLOW RATE Fa -    │     │FLOW RATE Fa -    │
              │  │DEFINED FLOW RATE △a│   │DEFINED FLOW RATE △a│
              │  └──────────────────┘     └──────────────────┘
              │                                  │     S241
              │                            ◇──────────────◇   NO
              │                           < DOES IGNITION  >──┐
              │                            ◇   OCCUR?     ◇    │
              │                                  │YES  S242    │
              │                           ┌──────────────────┐│
              │                           │FEED REFORMING RAW││
              │                           │MATERIAL AT NORMAL││
              │                           │FLOW RATE Fa -    ││
              │                           │DEFINED FLOW RATE △a×2│
              │                           └──────────────────┘│
              │                                  │            │
              │                           ┌──────────────────┐
              │                           │DETERMINE ABNORMAL │── S71
              │                           │    IGNITION       │
              │                           └──────────────────┘
              │                                  │
              │                           ┌──────────────────┐
              │                           │PERFORM NOTIFICATION│── S72
              │                           │OF ABNORMAL IGNITION│
              │                           └──────────────────┘
              │                                  │
              │                           ┌──────────────────┐
              │                           │ SUSPEND OPERATION │── S73
              │                           └──────────────────┘
              │                                  │
              └──────────────────────────────────┘
                            │
                    ┌───────────────┐
                    │     END       │
                    └───────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004116934 A
- EP 2237352 A2
- US 20130316258 A1